(19) Europäisches Patentamt
European Patent Office
Office européen des brevets

(11) **EP 3 245 159 B1**

(12) **EUROPEAN PATENT SPECIFICATION**

(45) Date of publication and mention of the grant of the patent:
**02.06.2021 Bulletin 2021/22**

(21) Application number: **16737914.8**

(22) Date of filing: **14.01.2016**

(51) Int Cl.:
*D21H 17/67* (2006.01)     *C08C 1/02* (2006.01)
*C01F 11/18* (2006.01)     *B01D 53/50* (2006.01)
*C01F 5/24* (2006.01)     *C01F 5/40* (2006.01)
*C01F 11/46* (2006.01)     *C04B 14/28* (2006.01)
*C09C 1/02* (2006.01)

(86) International application number:
**PCT/US2016/013480**

(87) International publication number:
**WO 2016/115396 (21.07.2016 Gazette 2016/29)**

(54) **A PROCESS FOR CONVERTING NATURAL CALCIUM CARBONATE INTO PRECIPITATED CALCIUM CARBONATE**

VERFAHREN ZUR UMWANDLUNG VON NATÜRLICHEM CALCIUMCARBONAT IN GEFÄLLTES CALCIUMCARBONAT

PROCÉDÉ DE CONVERSION DE CARBONATE DE CALCIUM NATUREL EN CARBONATE DE CALCIUM PRÉCIPITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2015 US 201562103425 P**
**03.03.2015 US 201562127687 P**
**12.03.2015 US 201562132385 P**
**18.08.2015 US 201562206594 P**

(43) Date of publication of application:
**22.11.2017 Bulletin 2017/47**

(73) Proprietor: **Imerys USA, Inc.**
**Roswell, GA 30076 (US)**

(72) Inventors:
• **PAYNTER, Christopher**
**Atlanta, GA 30318 (US)**
• **STOVALL, Kalena**
**Atlanta, GA 30319 (US)**
• **WICKS, Douglas**
**Johns Creek, GA 30022 (US)**
• **BUTLER-LEE, Gavin**
**St. Austell**
**Cornwall PL25 4QQ (GB)**
• **GOLBAYANI, Parvin**
**Kennesaw, GA 30144 (US)**
• **JARVIS, Nigel, Victor**
**St. Austell**
**Cornwall PL25 5DX (GB)**
• **PRING, Graham, M.**
**Polscoe**
**Lostwithiel PL22 0HS (GB)**
• **TAYLOR, David**
**Marietta, GA 30062 (US)**
• **PEREZ, Ricardo, M.**
**Cumming, GA 30041 (US)**

(74) Representative: **Haseltine Lake Kempner LLP**
**Redcliff Quay**
**120 Redcliff Street**
**Bristol BS1 6HU (GB)**

(56) References cited:
**WO-A2-01/85412       WO-A2-2013/020066**
**US-A- 2 822 242       US-A- 4 351 668**
**US-A- 4 889 694       US-A- 6 156 286**
**US-A1- 2004 161 388       US-A1- 2008 248 350**
**US-A1- 2012 301 520       US-A1- 2014 044 619**
**US-A1- 2014 141 380**

- C.-Q. Li ET AL: "Nucleation growth of calcium carbonate crystals prepared by gypsum", Huaxue Gongcheng/Chemical Engineering, 17 June 2015 (2015-06-17), pages 6-10,15, XP055494926, DOI: 10.3969/j.issn.1005-9954.2015.05.002 Retrieved from the Internet: URL:https://www.scopus.com/record/display. uri?eid=2-s2.0-84932144991&origin=resultsl ist&sort=plf-f&src=s&st1=nucleation+growth +of+calcium+carbonate+crystals&nlo=&nlr=&n ls=&sid=1e345a1f3ae1302b86b7d37a62f7d4f5&s ot=b&sdt=cl&cluster=scopubyr%2c%222015%2 2% 2ct%2bscosubtype%2c%22ar%22%2ct%2bscol ang% 2c%22Chine [retrieved on 2018-07-24]

- SONG KYUNGSUN ET AL: "Factors affecting the precipitation of pure calcium carbonate during the direct aqueous carbonation of flue gas desulfurization gypsum", ENERGY, ELSEVIER, AMSTERDAM, NL, vol. 65, 5 December 2013 (2013-12-05), pages 527-532, XP028820894, ISSN: 0360-5442, DOI: 10.1016/J.ENERGY.2013.11.008

**Description**

**BACKGROUND OF THE DISCLOSURE**

**Technical Field**

The present disclosure relates to a controlled process for converting natural calcium carbonate into a precipitated calcium carbonate having desired polymorph and crystal size characteristics.

**DESCRIPTION OF THE RELATED ART**

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present disclosure.

A power plant is an industrial facility for the generation of electric power. Each power station contains one or more generators, a rotating machine that converts mechanical power into electrical power by creating relative motion between a magnetic field and a conductor. The energy source harnessed to turn the generator varies widely. Most power stations in the world burn fossil fuels such as coal, oil, and natural gas to generate electricity. Fossil fuel power plants are commonly coal-fired power stations. These coal powered plants produce heat by burning coal in a steam boiler. The steam drives a steam turbine and generator that then produces electricity. A biomass-fueled power plant may be fueled by waste from sugar cane, municipal solid waste, landfill methane, or other forms of biomass. The waste products from these processes include ash, sulfur dioxide, nitrogen oxides and carbon dioxide. Some of the gases can be removed from the waste stream to reduce pollution.

Flue gas is the gas exiting to the atmosphere via a flue, which is a pipe or channel for conveying exhaust gases from a fireplace, oven, furnace, boiler or steam generator. Quite often, the flue gas refers to the combustion exhaust gas produced at power plants. The removal of waste products from flue gas, such as $SO_2$, is mandated by air quality regulatory agencies to reduce the acid rain caused by coal burning. To reduce the emissions of $SO_2$ from coal fired power plants the post-combustion flue gas is treated with limestone that sequesters the $SO_2$ in the form of gypsum (e.g. calcium sulfate).

Coal plants that use flue gas desulfurization (herein referred to as "FGD") to reduce sulfur content set very high specifications for the calcium content of the limestone they use. There is a large market for calcium sulfate from FGD for reuse in construction (e.g. Dry Wall), additionally as a solid with limited water solubility it can be effectively isolated from the process water and landfilled as a solid if required or converted into calcium carbonate by known processes.

Gypsum resulting from the FGD of coal fired power plants is an impure form of calcium sulfate. These impurities may have a major impact on the quality and polymorph of precipitated calcium carbonate obtained when the gypsum is reacted with carbonates. Magnesium sulfate, for example, is a co-product with the gypsum from the FGD process and is problematic as its high water solubility increases the difficulty of cleaning up the FGD process water. Overcoming these effects would be advantageous in providing a consistent industrial calcium carbonate.

Producing precipitated calcium carbonate (PCC) by use of calcined natural calcium carbonate is well-known and widely used in the industry. Typical natural calcium carbonate sources that are calcined, slaked, and carbonated to produce PCC include limestone, marble, chalk, and dolomitic limestone. Limestone is a sedimentary rock composed largely of the minerals calcite and aragonite. Dolomitic limestone is a type of rock that includes up to 50% dolomite (e.g. $CaMg(CO_3)_2$) by weight, where calcium ions present in the calcite part are replaced by magnesium ions. Marble is a rock resulting from metamorphism of sedimentary carbonate rocks, most commonly limestone or dolomite rock (e.g. calcite or dolomite). Metamorphism causes variable recrystallization of the original carbonate mineral grains. Chalk is a soft, white, porous sedimentary carbonate rock, a form of limestone composed of the mineral calcite. Chalk typically forms under deep marine conditions from the gradual accumulation of minute calcite shells (coccoliths) shed from micro-organisms called coccolithophores.

Calcining forces formation of calcium oxide from which a precipitated calcium carbonate is produced upon consecutive exposure to water and carbon dioxide. The energy consumed in calcining natural calcium carbonate is a large part of the production cost of precipitated calcium carbonate. In addition to production costs, the energy required for calcining natural calcium carbonate leads to high levels of greenhouse gas emissions, and therefore such calcining processes have a high carbon footprint.

In view of the foregoing, one aspect of the present disclosure is to provide a controlled process for converting natural calcium carbonate into precipitated calcium carbonate with desired polymorph and crystal size while avoiding the aforementioned disadvantages.

In other industries, such as drilling wells for hydrocarbon extraction, fluids may be used for a variety of reasons, such as lubrication and cooling of drill bit cutting surfaces while drilling, controlling formation fluid pressure to prevent blowouts, maintaining well stability, suspending solids in the well, minimizing fluid loss into and stabilizing the formation through which the well is being drilled, fracturing the formation in the vicinity of the well, displacing the fluid within the well with another fluid, cleaning the well, testing the well, emplacing a packer, abandoning the well or preparing the well for abandonment, and otherwise treating the well or the formation. These fluids should be capable of suspending additive weighting agents (to increase specific gravity of the mud), generally finely ground barites (barium sulfate ore), and transport clay and other substances capable of adhering to and coating the borehole surface. Conventional weighting agents, however, may have undesirable properties. For example, the weighting agents, such as iron oxide-based weighting agents may be overly abrasive and can cause damage or corrosion to well equipment. Similarly, barium sulfate agents may fill cracks in the well formation, thereby inhibiting flow of the hydrocarbon to be extracted. It may be desirable, therefore, to provide improved additives, such as weighting agents, with improved properties.

C.-Q. Li ET AL: "Nucleation growth of calcium carbonate crystals prepared by gypsum", Huaxue Gongcheng/Chemical Engineering, 17 June 2015 (2015-06-17), pages 6-10,15 discloses the preparation of precipitated calcium carbonate by mixing gypsum with sulfuric acid and with ammonium carbonate. Additives can also be present in the mixture. The product is in the form of calcite, aragonite or vaterite depending on the mixture composition and the crystal structure is said to be controlled during the process. WO 2013/020066 discloses the precipitation of calcium carbonate when contacting carbon dioxide with a solution of gypsum. WO 01/85412 reports the preparation of (high-purity) gypsum from natural calcium carbonate like from limestone or marble by reaction with sulfuric acid.

## SUMMARY

According to a first aspect, the present disclosure relates to a process for converting natural calcium carbonate into precipitated calcium carbonate involving treating the natural calcium carbonate with a sulfate to produce a gypsum, and reacting the gypsum with at least one carbonate source to produce precipitated calcium carbonate. The natural calcium carbonate is not calcined. In one embodiment, a carbon footprint is reduced by at least 5% relative to a process involving calcining the natural calcium carbonate.

In one embodiment, the sulfate is sulfuric acid. The natural calcium carbonate is treated with a molar equivalence of sulfuric acid that is greater than or equal to the molar equivalence of calcium present in the natural calcium carbonate.

The natural calcium carbonate may be limestone, marble, or chalk. In an alternative embodiment, the natural calcium carbonate is dolomitic limestone, and the treating produces gypsum and magnesium sulfate. The process of the present disclosure may further include reacting the magnesium sulfate with at least one carbonate source to produce magnesium carbonate. In one embodiment, the magnesium carbonate has a surface area greater than or equal to 20 $m^2$/g. In the present disclosure, the magnesium carbonate is in the form of magnesite.

The carbonate source is at least one selected from the group consisting of ammonium carbonate, ammonium bicarbonate, ammonium carbamate, calcium carbonate, dolomite, a metal carbonate, and carbon dioxide. In one embodiment, the carbonate source is a carbonate mixture of ammonium carbonate, ammonium carbamate, and ammonium bicarbonate, and the amount of ammonium bicarbonate is greater than or equal to the amount of ammonium carbamate or ammonium carbonate in the carbonate mixture. In an alternative embodiment, the carbonate source is a carbonate mixture of ammonium carbonate, ammonium carbamate, and ammonium bicarbonate, and the amount of ammonium bicarbonate is less than the amount of ammonium carbamate or ammonium carbonate in the carbonate mixture. In the present disclosure, the molar ratio of the gypsum to the carbonate source is 1:1.1 to 1:3.

The process of the present disclosure may further involve seeding the gypsum with a seed prior to, or during the reacting to control the crystalline polymorph and particle size of the precipitated calcium carbonate. The seed is at least one selected from the group consisting of calcium carbonate, dolomite, dolomitic carbonate, magnesium sulfate, magnesium hydroxide, titania, silica, and zinc oxide. In one embodiment, the seed does not exceed 10 wt% relative to the gypsum. In an alternative embodiment, the seed is at least 10 wt% relative to the gypsum.

The process of the present disclosure may further include adding at least one additive to the gypsum. The additive is a buffer, a dispersant, a thickener, an anticaking agent, a defoamer, a rheology agent, a wetting agent, a co-solvent, a brightness enhancer or a brightness dampener, or a pigment. According to certain embodiments, the additive is citric acid, phosphoric acid, ammonium sulfate, or sodium thiosulfate. In one embodiment, the weight % of the additive ranges from 0.5% to 10% relative to the gypsum.

The process for converting natural calcium carbonate into precipitated calcium carbonate may further include processing the precipitated calcium carbonate by at least one method selected from the group consisting of dewatering, drying, ageing, surface treating, size reducing, and beneficiating to produce a processed calcium carbonate. In one embodiment, the precipitated calcium carbonate is vaterite and the processed calcium carbonate is calcite or aragonite or a blend of polymorphs.

According to another aspect of this disclosure, the process may include providing a core or seed material in solution reacting the gypsum with the carbonate source, and precipitating calcium carbonate onto the core or seed material. The core material or seed material may be dissolvable in dilute acid, such as, for example, hydrochloric acid (HCl).

The core material or seed material may include a weighting agent. According to some embodiments, the core material may include iron oxide, such as, for example hematite. According to some embodiments, the core material may include barium sulfate. According to another aspect, the core materials or seed material may include at least one of AgI, AgCl, AgBr, AgCuS, AgS, $Ag_2S$, $Al_2O_2$, AsSb, $AuTe_2$, $BaCO_3$, $BaSO_4$, $BaCrO_4$, BaO, BeO, BiOCl, $(BiO)_2CO_3$, $BiO_3$, $Bi_2S_3$, $Bi_2O_3$, CaO, $CaF_2$, $CaWO_4$, $CaCO_3$, $(Ca,Mg)CO_3$, CdS, CdTe, $Ce_2O_2$, CoAsS, $Cr_2O_3$, CuO, $Cu_2O$, CuS, $Cu_2S$, $CuS_2$, $Cu_9S_5$, $CuFeS_2$, $Cu_6FeS_4$, $CuS.Co_2S_3$, $Fe^{2+}Al_2O_4$, $Fe_2SiO_4$, $FeWO_4$, $FeAs_2$, FeAsS, FeS, $FeS_2$, $FeCO_3$, $Fe_2O_3$, $\alpha\text{-}Fe_2O_3$, $\alpha\text{-}FeO(OH)$, $Fe_3O_4$, $FeTiO_3$, HgS, $Hg_2Cl_2$, MgO, $MnCO_3$, $Mn_2S$, $MnWO_4$, MnO, $MnO_2$, $Mn_2O_3$, $Mn_3O_3$, $Mn_2O_7$, MnO(OH), $CaMoO_4$, $MoS_2$, $MOO_2$, $MOO_3$, $NbO_4$, NiO, $NiAs_2$, NiAs, NiAsS, NiS, PbTe, $PbSO_4$, $PbCrO_4$, $PbWO_4$, $PbCO_3$, $(PbCl)_2CO_3$, $Pb^{2+}_2Pb^{4+}O_4$, $Sb_2SnO_5$, $Sc_2O_3$, SnO, $SnO_2$, SrO, $SrCO_3$, $SrSO_4$, $TiO_2$, $UO_2$, $V_2O_3$, $VO_2$, $V_2O_5$, VaO, $Y_2O_3$, $YPO_4$, $ZnCO_3$, ZnO, $ZnFe_2O_4$, $ZnAl_2O_4$, ZnS, $ZrSiO_4$, $ZrO_2$, $ZrSiO_4$, of combinations thereof. According to a further aspect, the seed material or core material may include two or more homogeneous domains, such as, for example, $(Ba,Sr)SO_4$, $(Ba,Sr)CO_3$, or $Ba(SO_4,CrO_3)$,

In some embodiments, the precipitated calcium carbonate may be between about 10% and about 25% by weight of the combined calcium carbonate and seed material or core material, such as, for example, between about 10% and about 15% by weight, between about 15% and about 20% by weight, between about 20% and about 25% by weight, between about 12% by weight and about 18% by weight, or between about 18% by weight and about 23% by weight of the combined calcium carbonate and seed material or core material.

In some embodiments, the precipitated calcium carbonate-core composition may have a specific gravity in a range having a lower limit of about 2.6, 3, 4, 4.5, 5, or 5.5 to an upper limit of about 20, 15, 10, 9, 8, or 7, and permutations thereof.

According to another aspect, the present disclosure relates to a process for producing a precipitated calcium carbonate having a reduced carbon footprint comprising converting natural calcium carbonate to a first precipitated calcium carbonate via a gypsum intermediate, wherein the converting emits a first amount of carbon dioxide less that a second amount of carbon dioxide emitted from a process including calcination of the natural calcium carbonate to convert the natural calcium carbonate to a second precipitated calcium carbonate.

The foregoing paragraphs have been provided by way of general introduction, and are not intended to limit the scope of the following claims. The described embodiments, together with further advantages, will be best understood by reference to the following detailed description taken in conjunction with the accompanying drawings.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

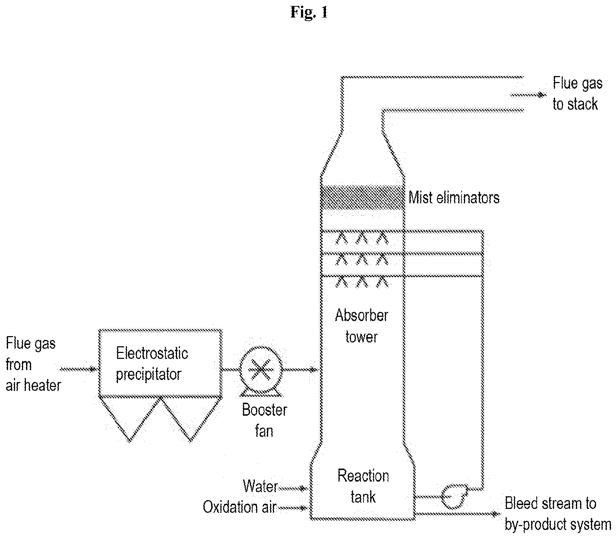

Fig. 1 is an illustration of a flue gas desulfurizing apparatus.

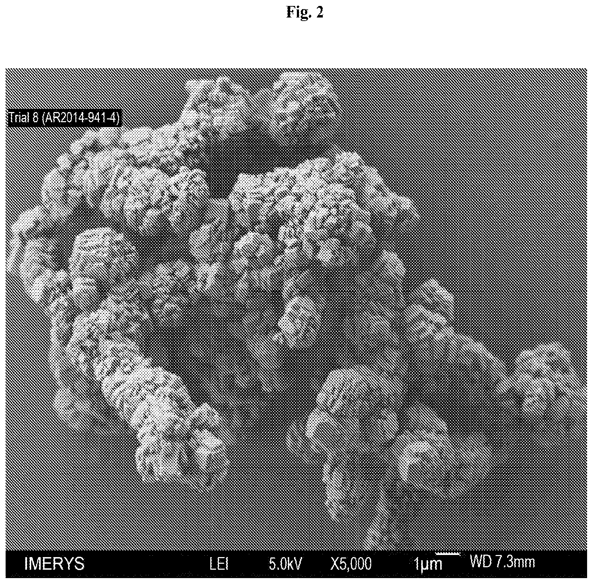

Fig. 2 is an SEM image of a rhombic calcite, 300-500 nm.

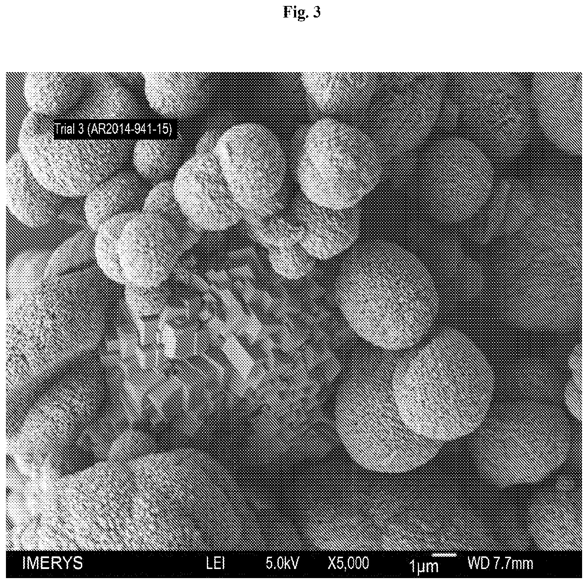

Fig. 3 is an SEM image of a calcite and vaterite blend.

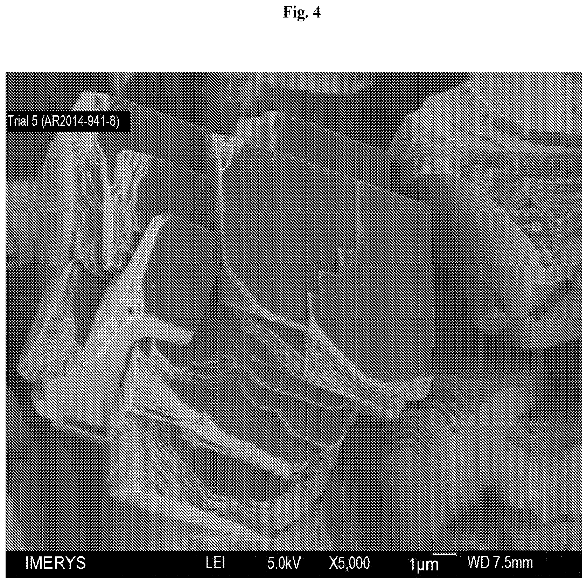

Fig. 4 is an SEM image of a rhombic calcite, ~5$\mu$m.

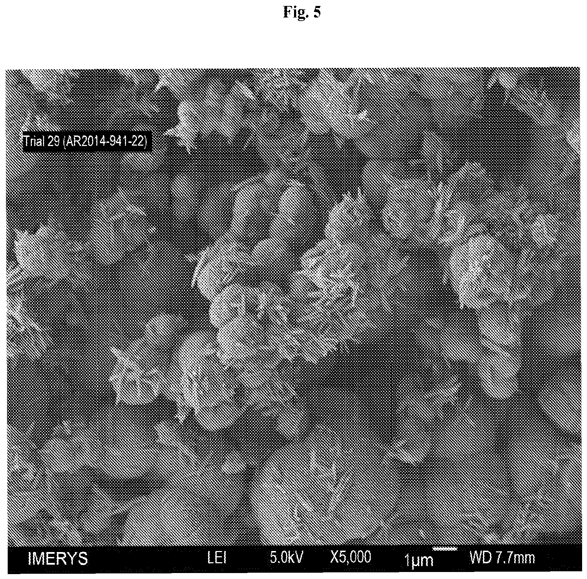

Fig. 5 is an SEM image of a vaterite and aragonite blend.

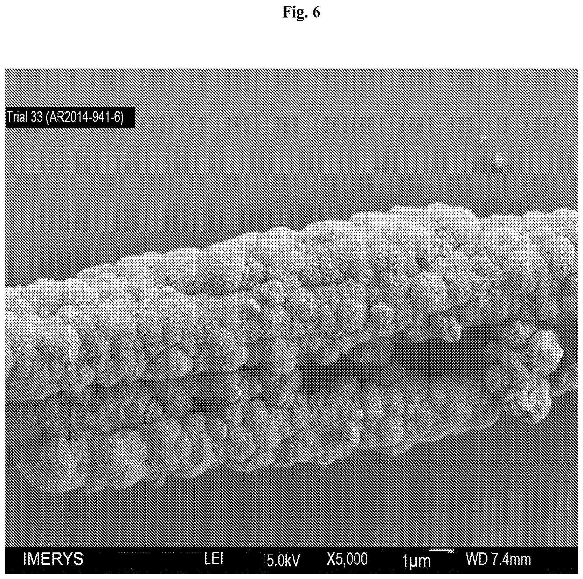

Fig. 6 is an SEM image of vaterite.

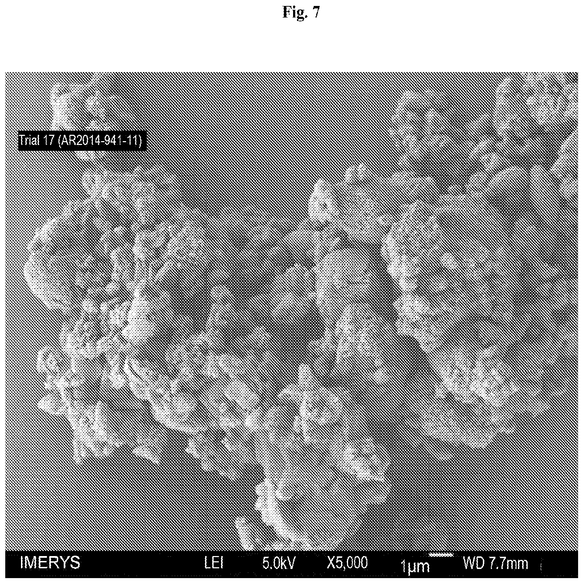

Fig. 7 is an SEM image of a vaterite and calcite blend produced from gypsum and sodium carbonate.

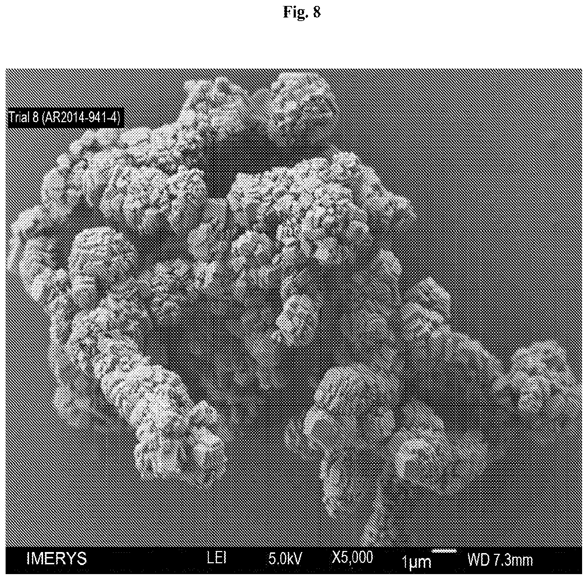

Fig. 8 is an SEM image of a rhombic calcite, 300-500 nm from calcite-seeded gypsum.

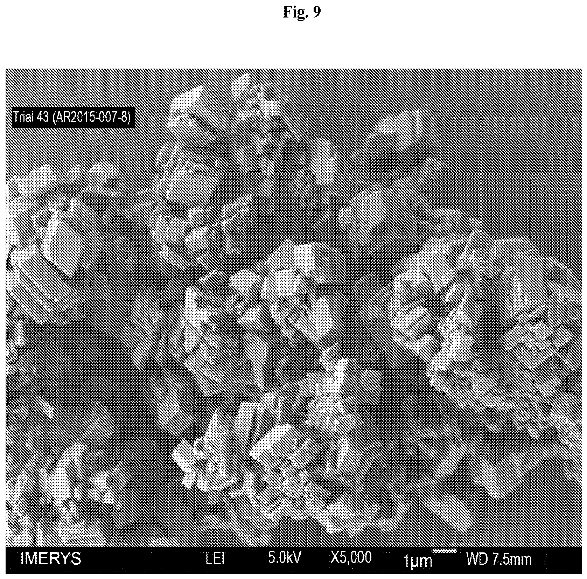

Fig. 9 is an SEM image of a rhombic calcite, 1-3 $\mu$m from dolomite seeded-gypsum.

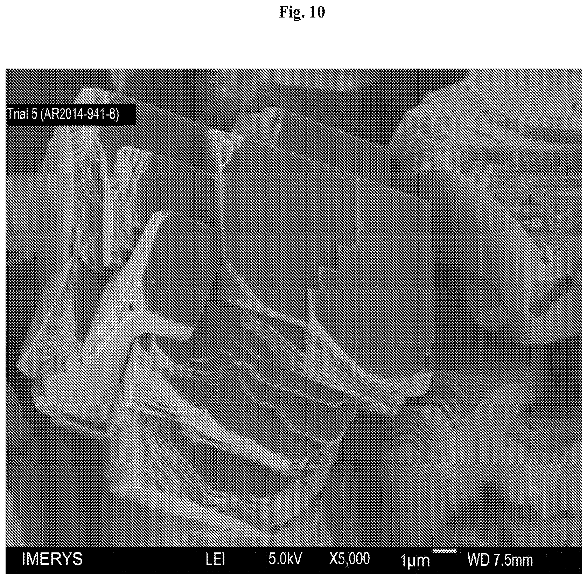

Fig. 10 is an SEM image of a rhombic calcite, 5$\mu$m from calcite seeded-gypsum.

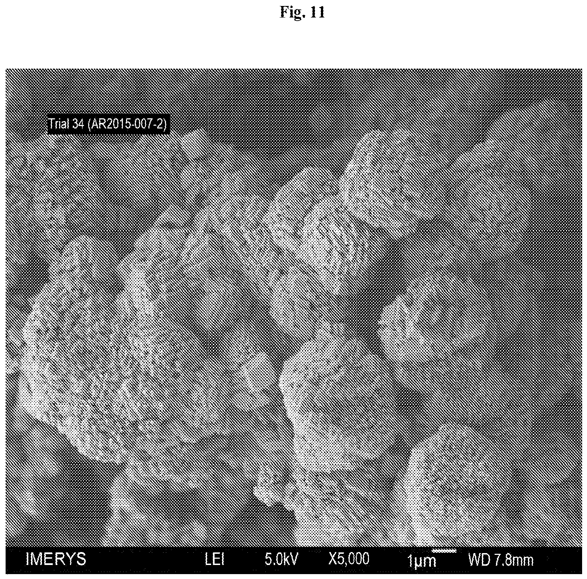

Fig. 11 is an SEM image of a rhombic calcite, 300 nm -1 $\mu$m from magnesite-seeded gypsum.

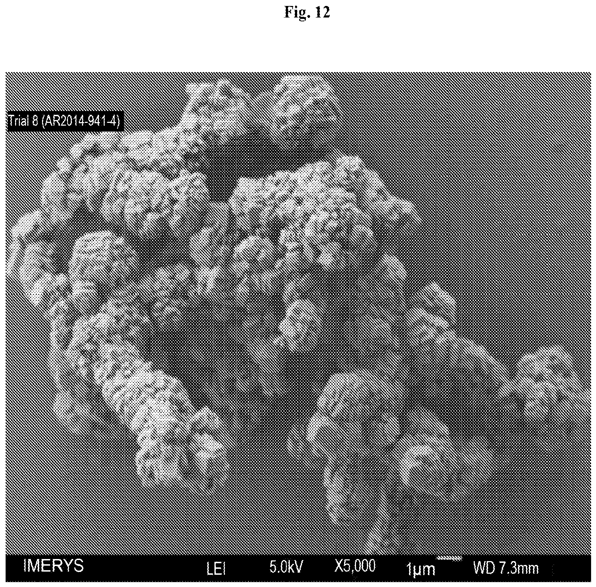

Fig. 12 is an SEM image of a calcite ~300-500nm with 2% calcite seeding and low theoretical ammonium bicarbonate content in ammonium carbonate.

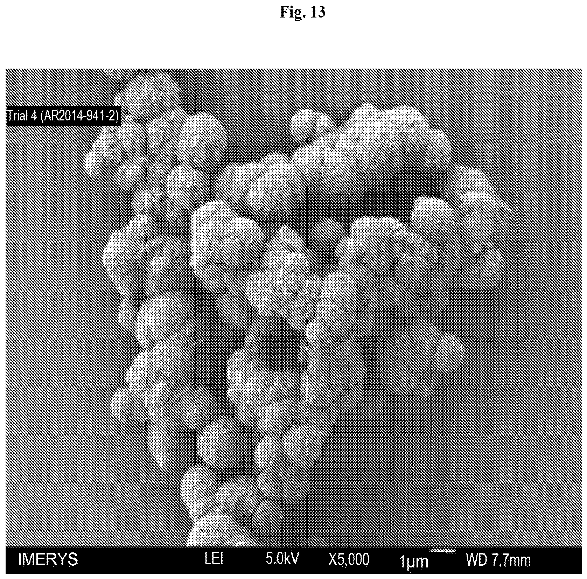

Fig. 13 is an SEM image of a vaterite ~300-500nm with no seeding and low theoretical ammonium bicarbonate content in ammonium carbonate.
Fig. 14 is an SEM image of a calcite ~300-500nm with 2% calcite seeding and high theoretical ammonium bicarbonate content in ammonium carbonate.

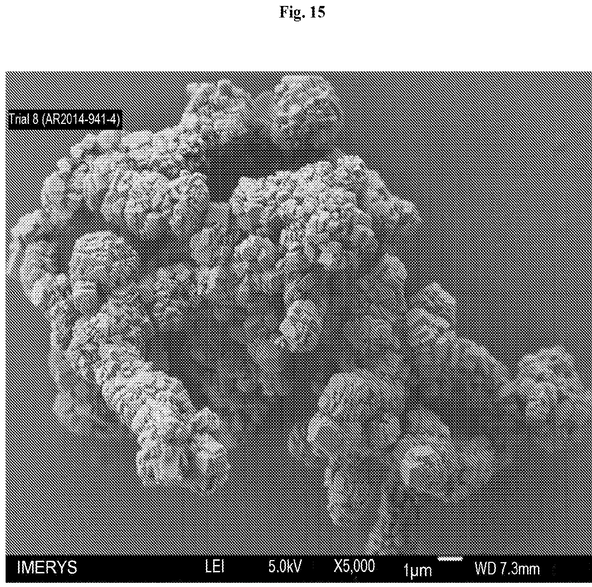

Fig. 15 is an SEM image of a Rhombic PCC from Crystal Seeding with calcite seed.

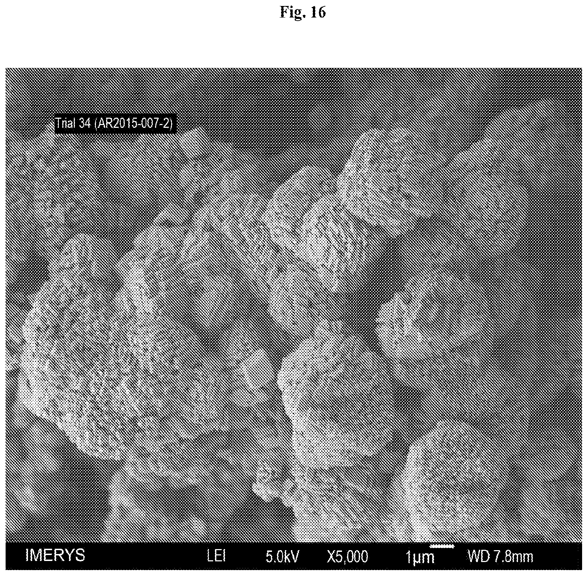

Fig. 16 is an SEM image of a Rhombic PCC from Crystal Seeding with magnesite seed.

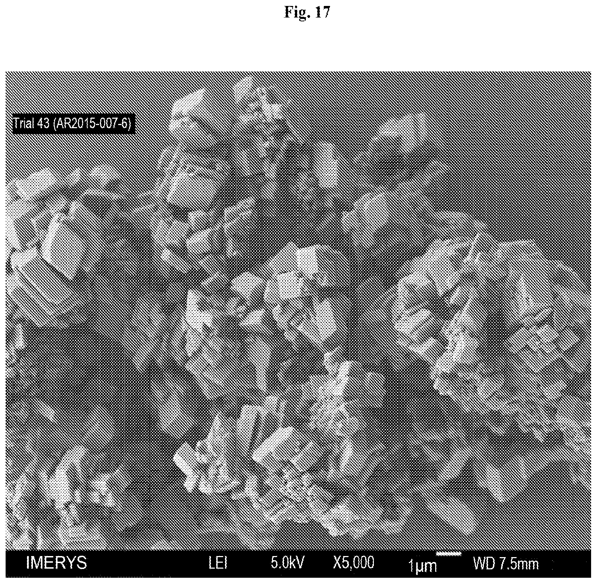

Fig. 17 is an SEM image of a Rhombic PCC from Crystal Seeding with dolomite seed.

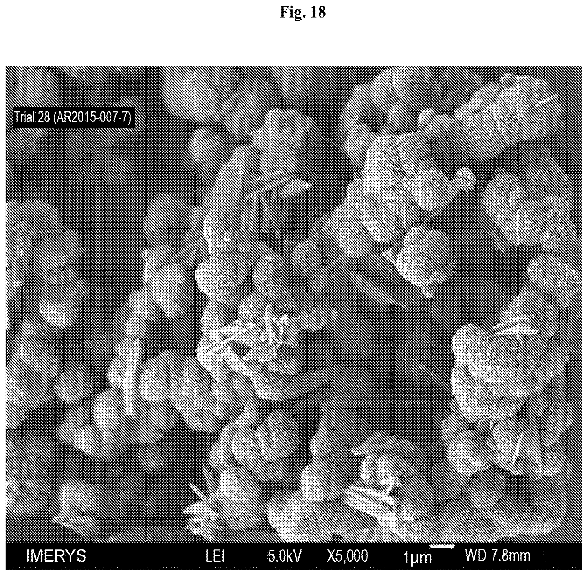

Fig. 18 is an SEM image of a Non-Rhombic Polymorph from Partial-Crystal Seeding of vaterite + aragonite from

[calcite + $MgCO_3$ (1:3 molar ratio)] seeding.

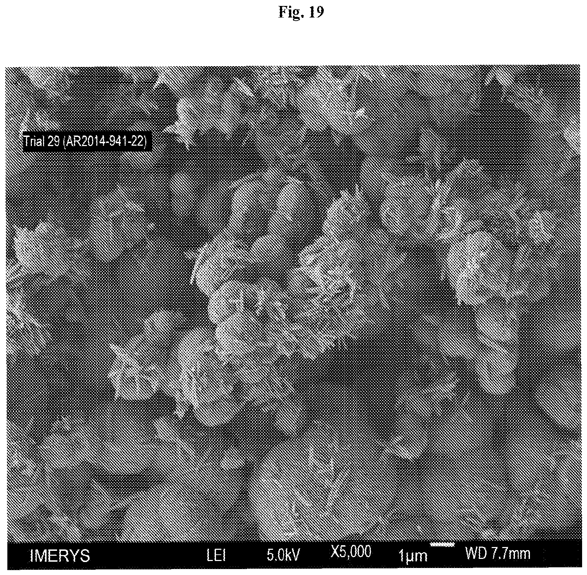

Fig. 19 is an SEM image of a Non-Rhombic Polymorph from Non-Crystal Seeding of vaterite + aragonite from $MgCO_3$ seeding.

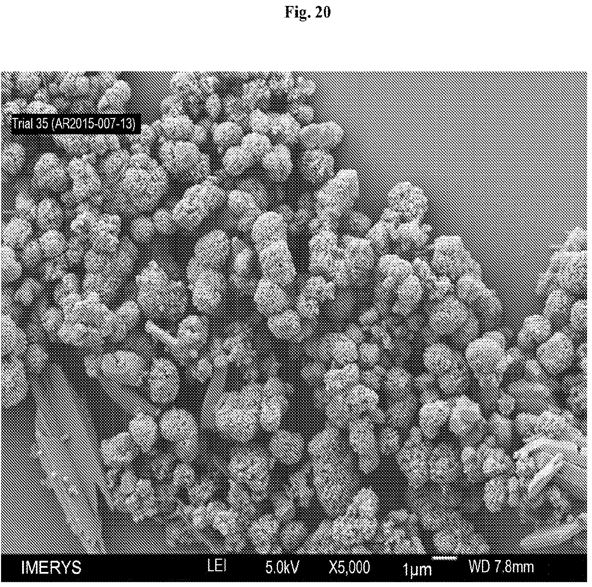

Fig. 20 is an SEM image of a Non-Rhombic Polymorph from Non-Crystal Seeding of vaterite rhombic calcite and aragonite from dolomitic quicklime seeding.

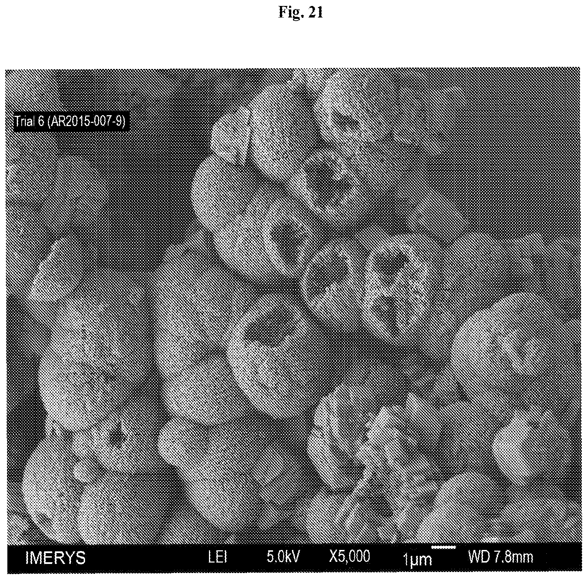

Fig. 21 is an SEM image of a Calcite, Vaterite from FGD Gypsum + Ammonium Carbonate.

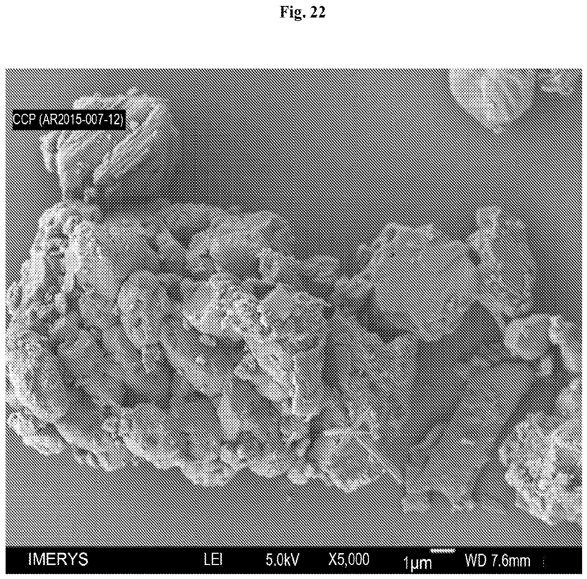

Fig. 22 is an SEM image of a Jamaican ore Seed ground calcium carbonate (GCC).

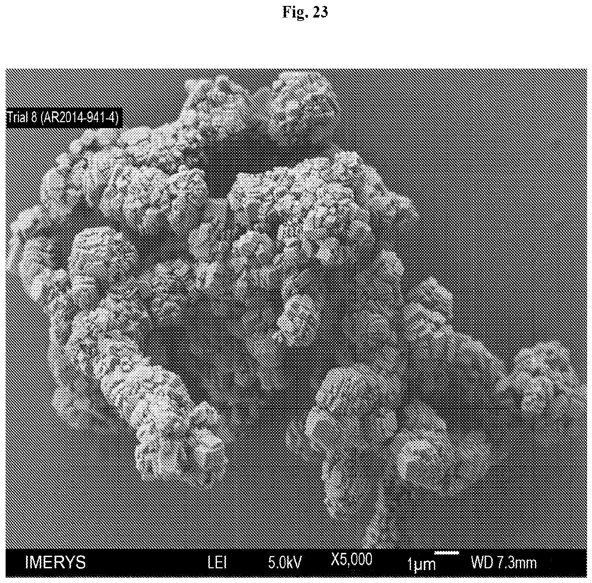

Fig. 23 is an SEM image of a Rhombic Calcite from Calcite-Seeded Gypsum.

Fig. 24 is an SEM image of a bluegrass ore Dolomite Seed ground calcium carbonate (GCC).

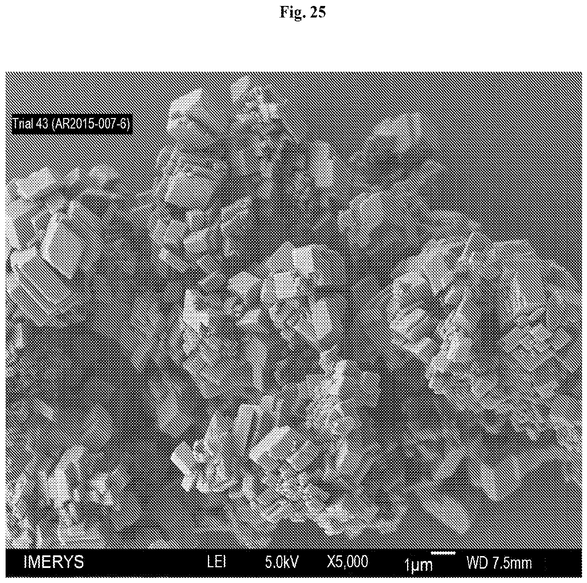

Fig. 25 is an SEM image of a Rhombic Calcite from Dolomite-Seeded Gypsum.

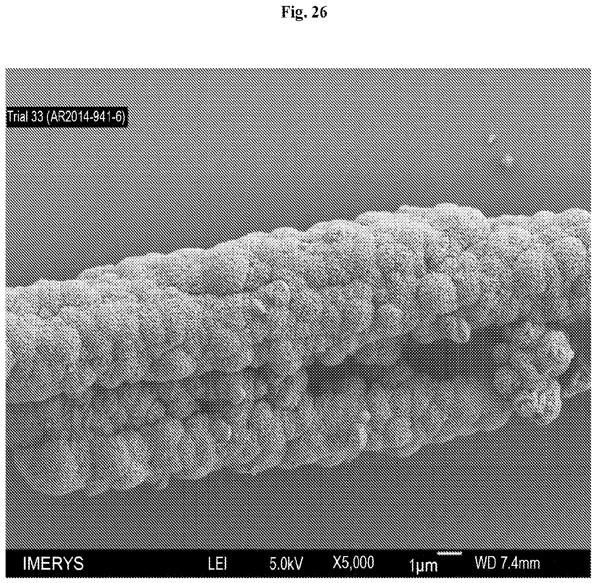

Fig. 26 is an SEM image of a Vaterite from Pure Gypsum (No Seeding) at Low Temp (12C).

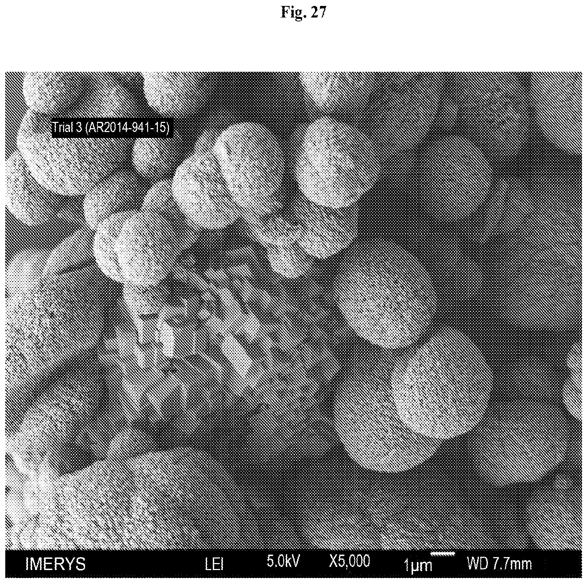

Fig. 27 is an SEM image of a Calcite, Vaterite Blend from Pure Gypsum (No Seeding).

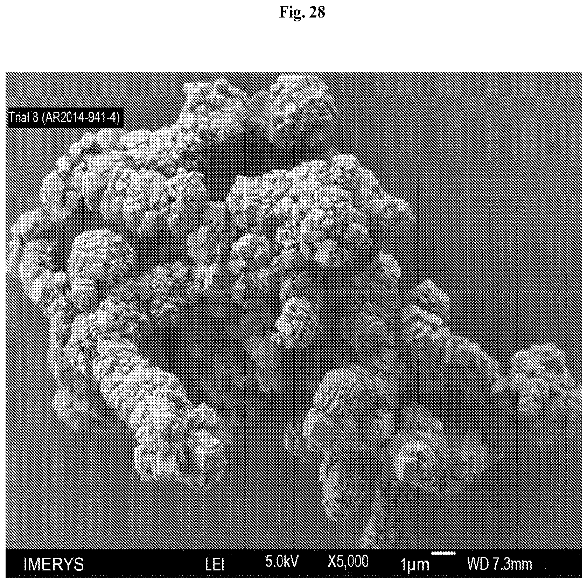

Fig. 28 is an SEM image of a Rhombic Calcite from Calcite-Seeded Gypsum.

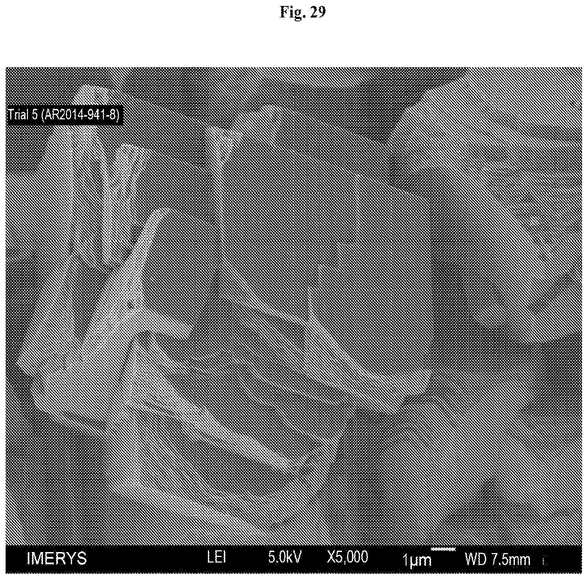

Fig. 29 is an SEM image of a Large Rhombic Calcite from Calcite-Seeded Gypsum Reacted with Ammonium Carbonate Heated >46C.

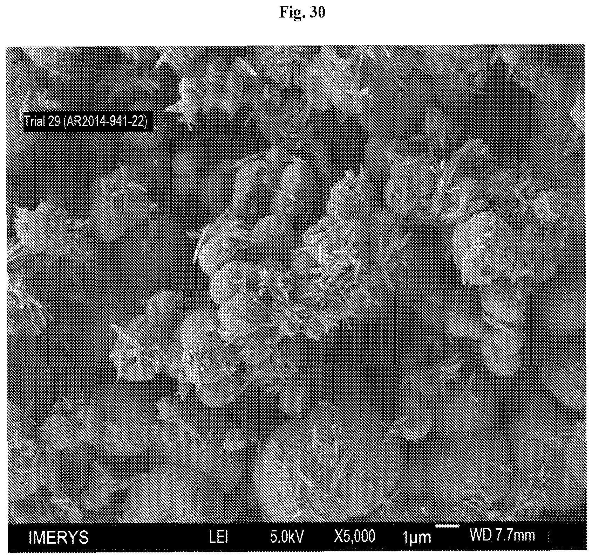

Fig. 30 is an SEM image of a Vaterite, Aragonite from Gypsum seeded with $MgCO_3$.

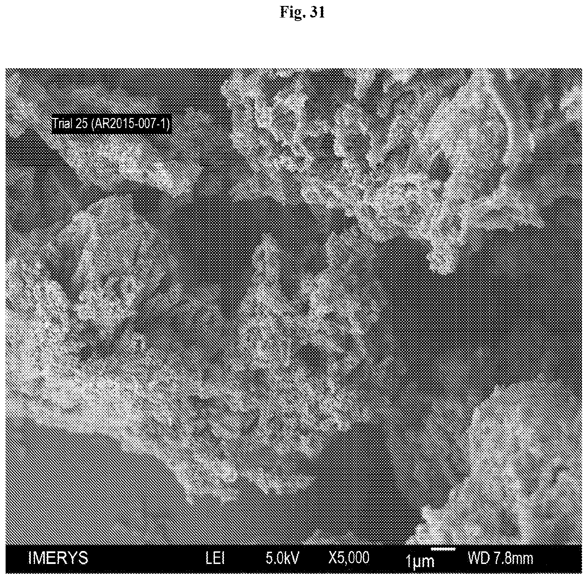

Fig. 31 is an SEM image of $MgCO_3$ from $MgSO_4$ + Ammonium Carbonate.

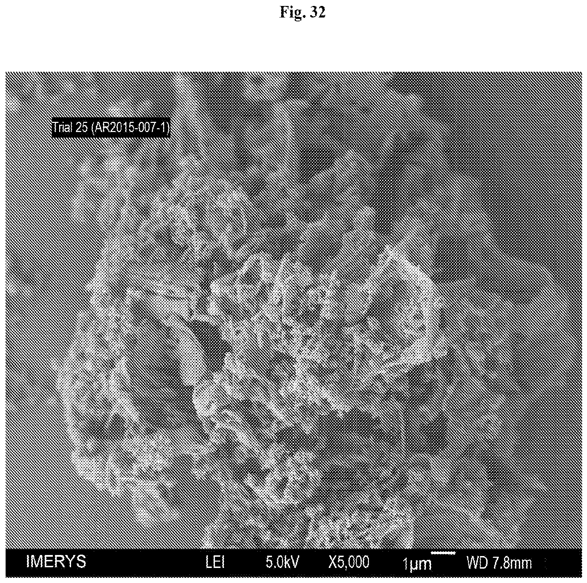

Fig. 32 is an SEM image of $MgCO_3$ from $MgSO_4$ + Ammonium Carbonate.

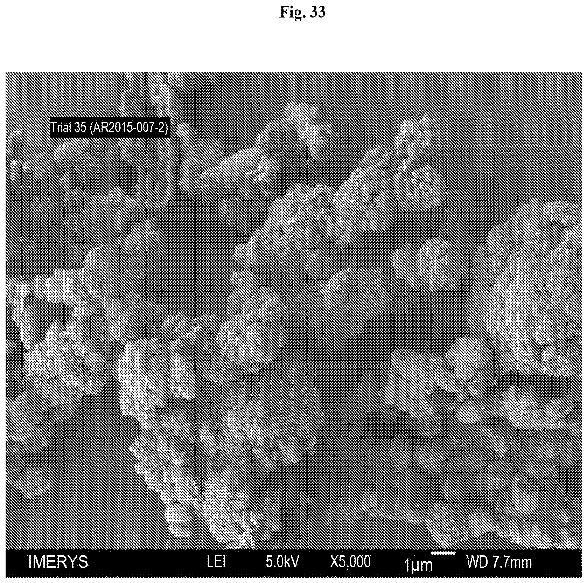

Fig. 33 is an SEM image of a Carbonate Blend (est. ~7.3% $MgCO_3$, 22.4% $MgCa(CO_3)_2$ and 61.8% $CaCO_3$) from 1:1 [$CaSO_4$:$MgSO_4$]+ Ammonium Carbonate.

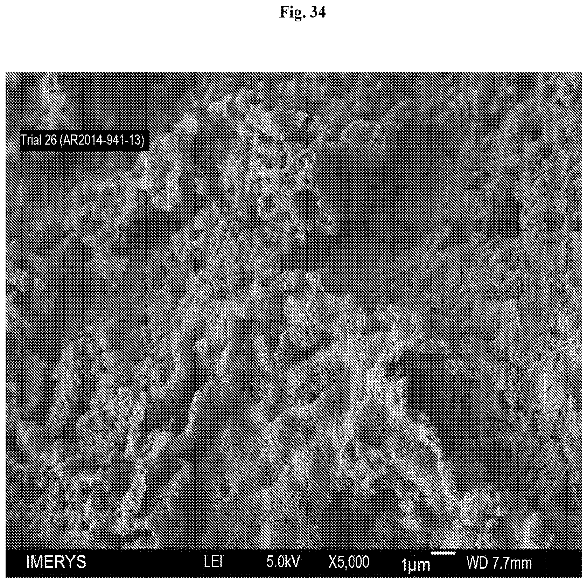

Fig. 34 is an SEM image of $MgCO_3$ from $MgSO_4$ + Sodium Carbonate.

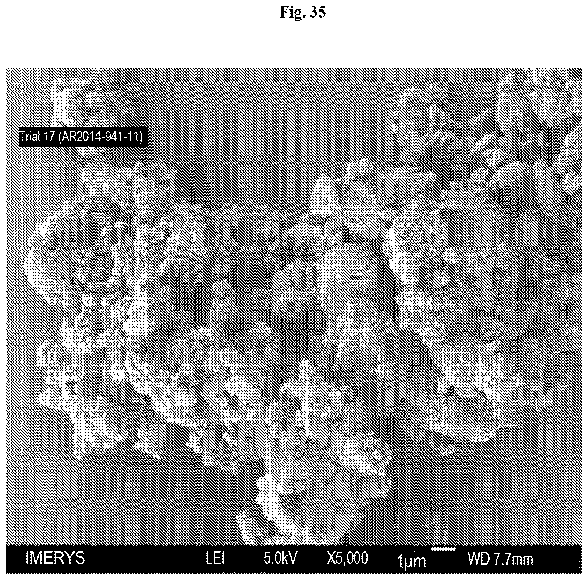

Fig. 35 is an SEM image of a Vaterite, Calcite from Gypsum + Sodium Carbonate.

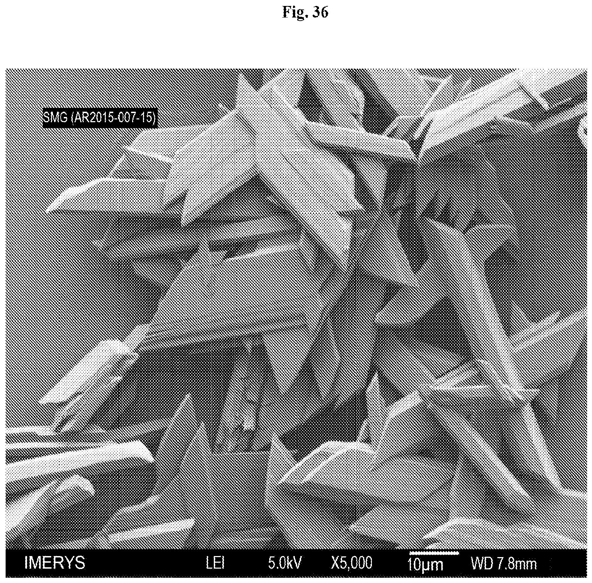

Fig. 36 is an SEM image of Gypsum, 99% (Sigma Gypsum) Used for Most Trials (Except Where Noted).

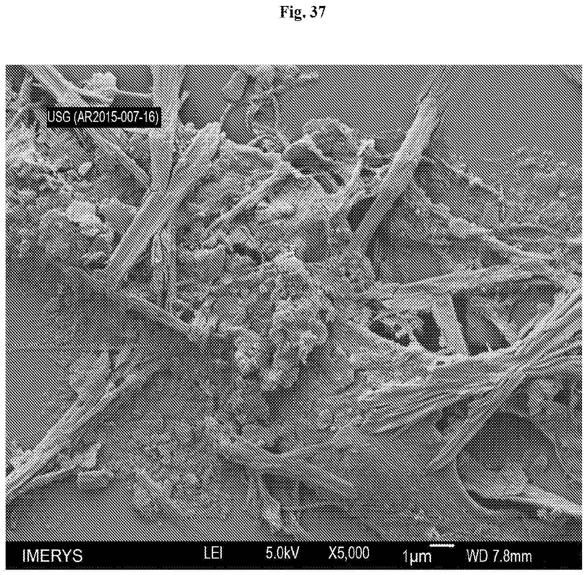

Fig. 37 is an SEM image of a US Gypsum.

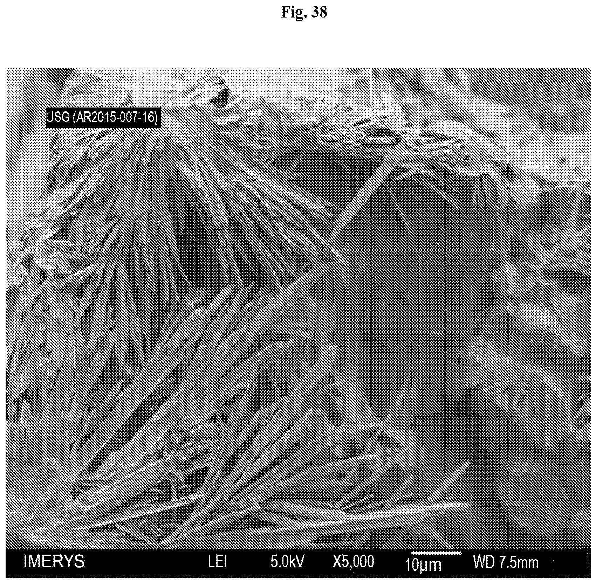

Fig. 38 is an SEM image of a US Gypsum.

Fig. 39 shows SEM images of vaterite to calcite conversion for various feed concentrations and aging processes.

Fig. 40 shows SEM images for different feed concentrations.

Fig. 41 shows an SEM image and an exemplary measurement of squareness.

## DETAILED DESCRIPTION OF EXEMPLARY EMBODIMENTS

Embodiments of the present disclosure will now be described more fully hereinafter.

A Process for Desulfurizing Flue Gas to Form Gypsum

The present disclosure relates to a process for desulfurizing a flue gas comprising i) scrubbing a flue gas comprising sulfur dioxide with a $SO_2$ sequestrating agent to yield a suspension comprising flue gas desulfurized gypsum and an aqueous solution comprising magnesium sulfate ii) separating the flue gas desulfurized gypsum from the magnesium sulfate solution iii) reacting at least one carbonate salt with the magnesium sulfate solution to yield magnesium carbonate, which may be of the form magnesite and iv) isolating the magnesium carbonate or magnesite.

In each of the particular embodiments herein, it is envisioned that the flue gas for desulfurization is obtained from a coal power plant, an oil power plant, a natural gas power plant, and/or a biomass fueled plant.

Calcium carbonate used in the flue gas desulfurization process can be pure calcium carbonate or have added components, such as magnesium. Depending on the calcium and magnesium levels, calcium carbonate may be classified as calcite or dolomite, among others.

Dolomite is an anhydrous carbonate mineral composed of calcium magnesium carbonate, e.g. $CaMg(CO_3)_2$. The word dolomite is also used to describe the sedimentary carbonate rock, which is composed predominantly of the mineral dolomite. The mineral dolomite crystallizes in the trigonal-rhombohedral system. It forms white, tan, gray, or pink crystals. Dolomite is a double carbonate, having an alternating structural arrangement of calcium and magnesium ions.

In terms of the present disclosure, magnesite may refer to the crystalline form or the amorphous form of magnesium carbonate, $MgCO_3$.

In some embodiments, the $SO_2$ sequestrating agent can be, but is not limited to, calcium-containing carbonate minerals including dolomite, calcite, vaterite, aragonite, ankerite, huntite, minrecordite, barytocite, ikaite, amorphous calcium carbonate, hydrates thereof, or combinations thereof. In a certain embodiment, the $SO_2$ sequestrating agent is dolomite, or a hydrate thereof. In one embodiment, the $SO_2$ sequestrating agent is vaterite of high surface area.

After scrubbing with dolomite or dolomitic limestone, the magnesium sulfate rich supernatant of a spent carbonate stream is separated from the solid gypsum co-product by any conventional means, such as filtration or centrifugation, and optionally recrystallizing the solid gypsum to obtain a product with a higher purity. Filtration methods may be, but are not limited to, vacuum filtration. The purity of isolated desulfurized gypsum may be variable, depending on the starting purity of the sulfur-containing flue gas.

According to some embodiments, a magnesium sulfate solution from the extraction of dolomite may be seeded with gypsum and/or a carbonate (such as calcium carbonate) to control the dolomite composition. For example, increasing the relative amount of gypsum may decrease dolomite precipitation, whereas relatively more ammonium carbonate may increase dolomite precipitation.

The supernatant is then treated with an appropriate carbonate salt to yield a value added precipitated magnesium carbonate, such as magnesite. In one embodiment, the carbonate salt comprises a carbonate or bicarbonate anion and at least one cation selected from the group consisting of sodium, calcium, cobalt, copper, potassium, ammonium, chromium, iron, aluminum, tin, lead, magnesium, silver, titanium, vanadium, zinc, lithium, nickel, barium, strontium, and hydronium. The added carbonate salt may be in solid form, in aqueous solution, or a suspension or slurry. Under conditions which the carbonate salt is added as a solution or suspension, the pH of the solution or suspension may be acidic (pH less than 6.5), neutral (pH 6.5-7.5), or basic (pH greater than 7.5).

Magnesite is a mineral with the chemical formula $MgCO_3$ (magnesium carbonate). Naturally occurring magnesite generally is a trigonal-hexagonal scalenohedral crystal system. Similar to the production of lime, magnesite can be burned in the presence of charcoal to produce MgO, which in the form of a mineral is known as periclase. Large quantities of magnesite are burnt to make magnesium oxide, which is a refractory material used as a lining in blast furnaces, kilns and incinerators. Magnesite can also be used as a binder in flooring material. Furthermore it is being used as a catalyst and filler in the production of synthetic rubber and in the preparation of magnesium chemicals and fertilizers. The isolated magnesite from the present disclosure, in particular, has value as a filler pigment especially for applications which require some degree of acid resistance (food packaging, synthetic marble). In one embodiment, the isolated magnesite may be amorphous with a surface area greater than 20 $m^2$/g.

In one embodiment, the flue gas desulfurized gypsum is separated from the magnesium sulfate solution by filtration or centrifugation.

In the present disclosure, the gypsum isolated by filtration or centrifugation can optionally be 1) used in the manufacture of wall board or other construction materials, 2) landfilled, or 3) converted into calcium carbonate by known processes in the prior art or by processes disclosed hereinafter.

As to the gypsum for use in the present disclosure, there is no particular limitation and the gypsum may be natural gypsum, synthetic (e.g., chemically produced) gypsum, FGD gypsum, and/or phosphogypsum. However, FGD gypsum and chemically produced gypsum are mentioned as examples.

According to some embodiments, the gypsum may be ground or milled. The grinding or milling of the gypsum may be followed by one or more of magnetic separation, bleaching, acid washing, or other beneficiation processes.

Pure gypsum is a soft sulfate mineral composed of calcium sulfate dihydrate, with the chemical formula $CaSO_4 \cdot 2H_2O$. It can be used as a fertilizer, is the main constituent in many forms of plaster and is widely mined. Gypsum resulting from the flue gas desulfurization (FGD) of coal fired power plants or chemically produced gypsum may be an impure form of calcium sulfate. When converted into calcium carbonate, these impurities may have a major impact on the quality and polymorph of precipitated calcium carbonate obtained when the gypsum is reacted with a carbonate source. Magnesium sulfate, for example, is a co-product with the gypsum and is problematic as its high water solubility increases the difficulty of separating gypsum from the magnesium sulfate co-product. In this disclosure, US gypsum refers to impure gypsum, which generally is 80-90% pure. This gypsum typically contains impurities such as calcite and $MgCO_3$ and these impurities may be in about a 1:3 ratio. Raw gypsum, or non-purified gypsum may have variable purity depending on the source.

## A Process for Converting Gypsum into Precipitated Calcium Carbonate

As used herein, "precipitated calcium carbonate" or "PCC" refers to a synthetically manufactured calcium carbonate material that can be tailor-made with respect to its compositional forms, purity, morphology, particle size, and other characteristics (e.g. particle size distribution, surface area, cubicity, etc.) using various precipitation techniques and methods. Precipitated calcium carbonate thus differs from natural calcium carbonate or natural calcium carbonate-containing minerals (marble, limestone, chalk, dolomite, shells, etc.) or ground calcium carbonate (natural calcium carbonate which has been ground) in terms of both methods of manufacture as well as the various composition/characteristics mentioned above, and which will be described more fully hereinafter.

The method of producing precipitated calcium carbonate (PCC) by use of calcined natural calcium carbonate is well-known and widely used in the industry. Calcining generates calcium oxide from which a precipitated calcium carbonate is produced upon consecutive exposure to water and carbon dioxide. However, the energy consumed in calcining natural calcium carbonate is a large part of the production cost. Therefore, converting impure FGD gypsum, a bulk byproduct from power plant energy production, or other non-calcined gypsum sources into PCC would provide a low energy and economical method for PCC manufacture. The present disclosure relates to a process for converting gypsum into precipitated calcium carbonate without a calcination step, and controlling the morphology, size, and properties of the precipitated calcium carbonate thus obtained.

Calcium carbonate can be precipitated from aqueous solution in one or more different compositional forms: vaterite, calcite, aragonite, amorphous, or a combination thereof. Generally, vaterite, calcite, and aragonite are crystalline compositions and may have different morphologies or internal crystal structures, such as, for example, rhombic, orthorhombic, hexagonal, scalenohedral, or variations thereof.

Vaterite is a metastable phase of calcium carbonate at ambient conditions at the surface of the earth and belongs to the hexagonal crystal system. Vaterite is less stable than either calcite or aragonite, and has a higher solubility than either of these phases. Therefore, once vaterite is exposed to water, it may convert to calcite (e.g., at low temperature) or aragonite (at high temperature: ~60°C). The vaterite form is uncommon because it is generally thermodynamically unstable.

The calcite form is the most stable form and the most abundant in nature and may have one or more of several different shapes, for example, rhombic and scalenohedral shapes. The rhombic shape is the most common and may be characterized by crystals having approximately equal lengths and diameters, which may be aggregated or unaggregated. Calcite crystals are commonly trigonal-rhombohedral. Scalenohedral crystals are similar to double, two-pointed pyramids and are generally aggregated.

The aragonite form is metastable under ambient temperature and pressure, but converts to calcite at elevated temperatures and pressures. The aragonite crystalline form may be characterized by acicular, needle- or spindle-shaped crystals, which are generally aggregated and which typically exhibit high length-to-width or aspect ratios. For instance, aragonite may have an aspect ratio ranging from about 3:1 to about 15:1. Aragonite may be produced, for example, by the reaction of carbon dioxide with slaked lime.

In the present disclosure, the methods of producing a PCC composition may be varied to yield different polymorphs of calcium carbonate, such as, for example, vaterite, calcite, aragonite, amorphous calcium carbonate, or combinations thereof. The methods may be modified by varying one or more of the reaction rate, the pH of the mixtures, the reaction temperature, the carbonate species present in the reaction (e.g., ammonium carbonate, ammonium bicarbonate), the concentration of the different carbonate species present in the reaction (e.g., ammonium carbonate and/or ammonium bicarbonate concentrations), the purity of the feed materials (e.g., purity of the feed gypsum), and the concentrations of the feed materials (e.g., gypsum and/or carbonate concentrations and/or seeds and other additives).

Exemplary Methods

In the present disclosure, converting gypsum into precipitated calcium carbonate is accomplished with Methods A-I, or a combination thereof. Method and process parameter selection enables control of the precipitated calcium carbonate structure, such as crystalline polymorph and particle size. The following is a general description of the Methods A-I.

Method A

The method includes:

i. Treating raw gypsum with a mineral acid including, but not limited to, nitric, sulfuric or phosphoric acid, to consume any unreacted calcium or magnesium carbonate remaining from the desulfurization process. The amount of mineral acid added to the gypsum is optionally a molar equivalent of or in excess of the amount of unreacted carbonate.
ii. Reacting the mineral acid treated gypsum with ammonium carbonate at low temperature ranging from 0-60°C or from 8-50°C, for 3-300 min or for 5-250 min, to produce calcium carbonate in a vaterite crystal structure, calcite crystal structure, aragonite crystal structure, amorphous calcium carbonate, or mixtures or blends thereof.
iii. Optionally annealing the resulting calcium carbonate in a dry or wet state to form a desired polymorph or polymorph mixture.

Method B

The method includes:

i. Treating raw gypsum with a mineral acid including, but not limited to, nitric, sulfuric or phosphoric acid, to consume any unreacted calcium or magnesium carbonate remaining from the desulfurization process. The amount of mineral acid added to the gypsum is equimolar to the amount of unreacted carbonate.
ii. Adding calcite (or aragonite) from either (ground calcium carbonate) GCC or PCC to the mineral acid treated gypsum as a seed, and reacting with ammonium carbonate at low temperature ranging from 0-60°C or from 8-50°C, for 3-300 min or for 5-250 min, to produce a calcium carbonate with different dominant morphologies (e.g., crystalline or amorphous) from that obtained without the added calcium carbonate. The calcite can be rhombohedral or scalenohedral.

Method C

The method includes:

i. Adding calcium carbonate to raw gypsum to afford a well-defined mixture of calcium carbonate and calcium sulfate.
ii. Reacting the gypsum and calcium carbonate mixture with ammonium carbonate at low temperature ranging from 0-60°C or from 8-50°C, for 3-300 min or for 5-250 min, to produce calcium carbonate with a different dominant crystal structure from that obtained without the added calcium carbonate.

Method D

The method includes:

i. Preparing a seeded gypsum by the process of Method B or Method C above, where dolomite, dolomitic carbonate, magnesium sulfate, magnesium hydroxide, titania ($TiO_2$), silica ($SiO_2$), or zinc oxide (e.g., ZnO), or mixtures thereof, is added as a seed instead of calcium carbonate.
ii. Reacting the seeded gypsum with ammonium carbonate to produce calcium carbonate in a vaterite crystal structure, calcite crystal structure, aragonite crystal structure, amorphous calcium carbonate, or mixtures or blends thereof.

According to some embodiments, the seed may result in a hybrid morphology having morphologies related to both the seed morphology and the PCC morphology.

Method E

The method includes:

i. The process of Methods A, B, C, or D where an additive is added to the gypsum to yield other defined calcium carbonate polymorphs and particle sizes, including but not limited to, rhombic or scalenohedral calcite, vaterite, aragonite, amorphous calcium carbonate, or blends thereof.

Method F

The method includes

i. The process of Methods A through E wherein the ammonium carbonate comprises a mixture of ammonium carbonate, ammonium carbamate and ammonium bicarbonate, such that the amount of ammonium bicarbonate is greater than or equal to the ammonium carbamate concentration, and upon reaction yields a calcite or calcite-vaterite blend.

Method G

The method includes:

i. The process of Methods A through E wherein the ammonium carbonate comprises a mixture of ammonium carbonate, ammonium carbamate and ammonium bicarbonate, such that the amount of ammonium bicarbonate is less than or equal to the ammonium carbamate concentration, and upon reaction yields a vaterite or vaterite-calcite blend.

Method H

The method includes:

i. The process of Methods A-G where the ammonium carbonate is produced by the reaction of ammonium hydroxide

with $CO_2$. The ammonium carbonate introduced to the gypsum slurry is of a tailored pH, and/or excess $CO_2$ is employed to influence the polymorph and particle size obtained.

Method I

The method includes:

i. The process of Methods A through E where a metal carbonate is used in place of the ammonium carbonate for reaction with the gypsum.
ii. Reacting the gypsum of Methods A through E with the metal carbonate to produce calcium carbonate in a vaterite crystal structure, calcite crystal structure, or calcite- vaterite-aragonite crystal structure blend.

Tables 1 and 2 below identify product characteristics obtained from various examples of the foregoing methods.

EP 3 245 159 B1

TABLE 1

| Reaction Details | Reaction Temperature | Reaction Time (minutes) | Product (FTIR) | Geometry (SEM) | PSD (d50), microns | D30/d70x100 | Surface Area (BET), m²/g | Surface Area (StA uptake), m²/g |
|---|---|---|---|---|---|---|---|---|
| 99% pure gypsum + ammonium carbonate (DI water) | n/a | 20 | vaterite | spherical "coral" + some rhombic | 5.32 | 68.49 | 11.25 | 10.63 |
| 99% pure gypsum + ammonium carbonate | 46 °C | 10 | vaterite | spherical "coral" + some rhombic | 5.02 | 63.29 | 11.67 | 10.43 |
| 99% pure gypsum + ammonium carbonate | 32-37 °C | 10 | vaterite | spherical "coral" | 3.96 | 67.11 | - | 13.51 |
| 99% pure gypsum + ammonium carbonate @ room temp | n/a | 95 | vaterite | spherical "coral" + some large rhombic | 4.72 | 62.50 | 13.9 | 12.89 |
| 99% pure gypsum + ammonium carbonate @ room temp (redo of Trial 15) | 20-22 °C | 60 | vaterite | spherical "coral" + some rhombic | 4.02 | 62.60 | 14.17 | - |
| 99% pure gypsum, 2% "pure" calcium carbonate +2% H2SO4 (excess) w ammonium carbonate | 32 °C | 30 | spherical vaterite | spherical "coral" + some rhombic | 3.08 | 65.79 | n/a | 14.89/14.82 |
| 99% pure gypsum, 2% Supermite + ammonium carbonate | 35-36 °C | 12 | calcite | rhombic | 4.61 | 60.24 | 4.95 | 4.56 |
| 99% pure gypsum. 2% "pure" carbonate + ammonium carbonate | 32 °C | 10 | calcite | rhombic | 5.24 | 59.52 | 4.15 | 4.41 |
| 99% pure gypsum, 2% "pure" calcium carbonate + ammonium carbonate | 30 °C | 20 | calcite | rhombic | 5.51 | 59.52 | 3.65 | 3.74 |
| US gypsum + ammonium carbonate | 36 °C | 10 | calcite | rhombic | - | - | 4.65 | 3.03 |
| 99% pure gypsum, 2% MgCO$_3$ w ammonium carbonate | 32 °C | 30 | veterite + smallamount calcite | spherical "coral" + needles | 3.23 | 59.88 | n/a | 24.32 |
| 99% pure gypsum, magnesite w ammonium | 32-34 °C | 10 | calcite/vaterite -9:1 | spherical "coral" | 4.84 | 60.98 | n/a | 6.33 |

| Reaction Details | Reaction Temperature | Reaction Time (minutes) | Product (FTIR) | Geometry (SEM) | PSD (d50), microns | D30/d70x100 | Surface Area (BET), m²/g | Surface Area (StA uptake), m²/g |
|---|---|---|---|---|---|---|---|---|
| 99% pure gypsum, 2% dolomitic quicklime + ammonium carbonate | 31 °C | 13 | vaterite, calcite, aragonite | Rhombic, spherical "coral" + needles | 2.89 | 51.00 | n/a | 13.73 |
| 99% pure gypsum, 2% dolomite + ammonium carbonate | 30 °C | 25 | calcite | rhombic | 4.91 | 60.98 | n/a | 2.62 |
| 99% pure gypsum, ∼10% ammonium sulfate solution + ammonium carbonate | 32 °C | 10 | vaterite | spherical "coral" + some large rhombic | 4.26 | 68.97 | 14.25 | 12.69 |
| 99% pure gypsum + ammonium carbonate (amm carb temp fluctuated >46C during dissolution, but cooled: to 43C prior to gypsum addition) | 31-33 °C | 10 | calcite | rhombic - large | 27.1 | 72.46 | - | 2.78 |
| Sigma gypsum + ammonium hydroxide w CO₂ at 12C | 12 °C | 120 | vaterite + ∼8% gypsum | spherical "coral" | 13.76 | 71.43 | - | 15.25/16.04 |
| Sigma gypsum+ sodium carbonate | 29-30 °C | 12 | vaterite | elliptical "coral" + some large rhombic | 2.66 | 43.29 | 10.71 | 10.66 |
| dolomitic quicklime + ammonium carbonate | 35 °C | 40 | carbonate + 15-20% Mg (OH)2 | various shapes: balls, other | 3.5 | 26 | 32.29 | n/a |
| MgSO4 + sodium carbonate | 25-26 °C | 10 | MgCO₃ | undefined | 0.74 | could not be determined | could not be determined | could not be determined |

EP 3 245 159 B1

**TABLE 2**

| Reaction Details | Reaction Temperature | Reaction Time (minutes) | Product (FTIR) | Geometry (SEM) | PSD (d50), microns | d30/d70x100 | Surface Area (BET), m2/g | Surface: Area (StA update), m2/g |
|---|---|---|---|---|---|---|---|---|
| 99% gypsum + ammonium carbonate (at elevated ammonium carbonate temperature). | 33 °C | 10 | calcite : | large rhombic | 27.1 | 72.46 | n/a | 2.78 |
| 99% pure gypsum, 2% calcite + ammonium carbonate | 36 °C | 12 | calcite | Rhombic | 4.61 | 60.24 | 4.95 | 4.56 |
| 99% pure gypsum, 2% magnesite + ammonium carbonate | 34 °C | 10 | calcite w small amount of vaterite | Rhombic | 4.84 | 60.24 | n/a | 6.33 |
| 99% pure gypsum, 2% dolomite + ammonium carbonate | 35 °C | 25 | calcite | Rhombic | 4.91 | 60.24 | n/a | 2.62 |

In the present disclosure, the term "reaction" may refer to any complete or partial reaction. A partial reaction refers to any reaction where some amount of a reagent or substrate remains in the reaction mixture after the reaction takes place.

In regards to methods A-I, precipitation of the PCC may be influenced or controlled by one or more of the reaction rate, pH, the ionic strength, reaction temperature, carbonate species present in the reaction, seed species composition, seed species concentration, purity of the feed materials (e.g., gypsum), concentration of the feed materials, ratio of the feed materials, or aging of the reaction components.

In terms of methods A-I, the pH of the reacting mixture may be controlled. In one embodiment, the reacting mixture may be acidic (pH less than 6.5), neutral (pH 6.5-7.5), or basic (pH greater than 7.5). In regards to methods A-I, the ionic strength of the reacting mixture may also be controlled. The ionic strength, $I$, of a solution is a function of the concentration of all ions present in that solution,

$$I = \frac{1}{2} \sum_{i=1}^{n} c_i z_i^2$$

where $c_i$ is the molar concentration of ion i (M, mol/L), $z_i$ is the charge number of that ion, and the sum is taken over all ions in the solution. In one embodiment, the ionic strength is controlled by the stoichiometry of ionizable reactants. In another embodiment, the ionic strength is controlled by the addition of ionic additives. These ionic additives may be a participating reactant, a spectator ion (i.e. a non-participating reactant), and/or a total ionic strength adjustment buffer. In another embodiment, the ionic strength is controlled by the use of deionized (DI) water.

In regards to methods A-I, a solvent may be added to gypsum to form a gypsum solution, slurry or suspension prior to reacting with the carbonate source. Suitable solvents that may be used for forming a gypsum solution, slurry, or suspension include aprotic polar solvents, polar protic solvents, and non-polar solvents. Suitable aprotic polar solvents may include, but are not limited to, propylene carbonate, ethylene carbonate, butyrolactone, acetonitrile, benzonitrile, nitromethane, acetonitrile, nitrobenzene, sulfolane, dimethylformamide, N-methylpyrrolidone, or the like. Suitable polar protic solvents may include, but are not limited to, water, nitromethane, and short chain alcohols. Suitable short chain alcohols may include, but are not limited to, one or more of methanol, ethanol, propanol, isopropanol, butanol, or the like. Suitable non-polar solvents may include, but are not limited to, cyclohexane, octane, heptane, hexane, benzene, toluene, methylene chloride, carbon tetrachloride, or diethyl ether. Co-solvents may also be used. In a certain embodiment, the solvent added to gypsum is water. Gypsum is moderately water-soluble (2.0-2.5 g/l at 25 °C). Therefore, to form a gypsum solution, enough water is added to fully dissolve all of the gypsum prior to reaction. To form a slurry or suspension, an amount of water is added to partially dissolve the gypsum, such that some of the gypsum is fully dissolved and some of the gypsum remains in solid form. In another embodiment, water is added to gypsum to form a slurry, wherein the percent of solids in the slurry is 10-50%, 20-40%, or 30-35%. In methods A-I, the concentration of the reacting mixture is also controlled. In a certain embodiment, the concentration is controlled by the addition or subtraction of water from the reacting solution, mixture, or slurry.

In terms of methods A-I, the mineral acid, ammonium carbonate, calcite, aragonite, calcium carbonate, dolomite, ammonium bicarbonate, ammonium carbamate, ammonium hydroxide, carbon dioxide, or any other additive or combination thereof, may be added to the gypsum in bulk, portion-wise, or by a slow-addition process to control the PCC product characteristics. The rate of addition of these components also controls the reacting mixture concentration. In terms of methods A-I, the mineral acid, ammonium carbonate, calcite, aragonite, calcium carbonate, dolomite, ammonium bicarbonate, ammonium carbamate, ammonium hydroxide, carbon dioxide, or any other additive or carbonate source or combination thereof is added as a solution, a solid, a suspension or slurry, a gas, or a neat liquid. In terms of adding a gas, the gas may be bubbled into a solution to an effective concentration, or may be used to purge or pressurize the reaction vessel until a desired effective concentration is reached.

In one embodiment, the carbonate source is selected from the group consisting of ammonium carbonate, ammonium bicarbonate, ammonium carbamate, calcium carbonate, dolomite, a metal carbonate, and carbon dioxide, wherein the metal carbonate comprises a carbonate or bicarbonate anion and at least one cation selected from the group consisting of sodium, calcium, cobalt, copper, potassium, ammonium, chromium, iron, aluminum, tin, lead, magnesium, silver, titanium, vanadium, zinc, lithium, nickel, barium, strontium, and hydronium. In a certain embodiment, water is added to the carbonate source to form a slurry prior to the reaction with gypsum. The carbonate source slurry is then added to the gypsum to give a molar ratio of reaction of gypsum:carbonate source of 1:1.1 to 1:5, 1:1.3 to 1:2.5, or 1:1.5 to 1:2. The carbonate selected should, after reaction with the gypsum, yield a sulfate product with higher solubility than the calcium carbonate generated. Therefore, the generated sulfate may be separated from the calcium carbonate precipitate by removal of the aqueous phase from the reaction slurry. Exemplary metal carbonates include sodium carbonate and magnesium carbonate. The sulfate product can be treated as needed, and used for an appropriate, separate application. For example, if ammonium carbonate is used in the reaction, ammonium sulfate will be generated, which can be separated and used in applications such as fertilizer. In addition, a portion can be fed into the starting gypsum slurry to aid in control of the reaction rate, and consequently, control the PCC produced. After separating the PCC slurry from the aqueous solution to form a PCC cake, the cake can be washed with water to remove remaining sulfate. The carbonate source can be pre-formed or generated during the reaction. For example, $CO_2$ may be bubbled with ammonia gas to generate ammonium carbonate used for the reaction. In general, ammonium carbonate exists as a mixed salt comprising a mixture of ammonium carbonate, ammonium carbamate, and ammonium bicarbonate. The amount of each species may depend on the reaction conditions used to manufacture the ammonium carbonate. Furthermore, ammonium carbamate quickly converts to ammonium carbonate in the presence of water. In general, ammonium bicarbonate dissolves slower and reacts slower with gypsum than ammonium carbamate or ammonium carbonate.

The PCC production process of methods A-I of the present disclosure aims to produce only one form of PCC. However, a small amount of an alternative polymorph is often present, and can be readily tolerated in most end uses. Thus, the PCC compositions comprising mixtures of crystalline forms (e.g., aragonite and calcite) can be readily employed in coating formulations. Even in the case of PCC compositions predominantly comprising one form (predominately vaterite, for example), the compositions are likely to contain a small amount of at least one other crystal PCC structure (e.g., calcite). As a result, the PCC compositions of the present disclosure may optionally comprise at least one second PCC form that differs from the main PCC form.

In some embodiments, the size, surface area, and cubicity of the PCC products may be influenced by feed concentrations or aging of the reaction components. For example, a lower feed concentration may result in a larger particle size distribution. A larger particle size distribution may have a lower surface area. Aging, for example, may reduce the surface area of the PCC or improve the cubicity of the PCC particles. According to some embodiments, the aging may convert some or all of a polymorph to a different polymorph. For example, aging may convert a vaterite phase to calcite. According to some embodiments, including ammonium sulfate in a gypsum slurry feed may aid in controlling the PCC polymorph and particle size.

In certain embodiments of the present disclosure, a stage of drying the PCC product may also be carried out in any of methods A-I subsequent to dewatering. The drying of the product may also contribute to the resulting crystal product polymorph. In certain embodiments of the present disclosure, the PCC reaction product is a first composition after the reaction, prior to drying, with a solids content of at least 70%. The PCC reaction product may convert to a second composition after the drying stage. The drying stage may convert any amorphous PCC product of a first composition to a crystalline polymorph of a second composition (and different drying methods may make different polymorphs). The product of a first composition may be aged and seeded. A dried product may also be aged. Similar to the drying process, aging may also change the polymorph composition. The reaction to form PCC, the seeding, the drying, and the aging may all be employed in a batch process, or a continuous process (e.g. in a tubular reactor with inline static mixers or cascade mixers). In one embodiment, the drying is performed at a temperature range of 30-150°C for 1-15 hours.

In some embodiments, the addition of additives or seed materials may affect the structure of the PCC. For example, adding citric acid to the PCC formation step may increase the surface area of a formed PCC product. Altering the pH, such as through the use of an acidic additive, such as an acid (e.g., phosphoric acid), may be used to control or vary the shape, particle size, or surface area of the PCC, and in particular to vary the morphology of a PCC. In some embodiments, the seed composition may be used to control the resulting PCC morphology. For example, using greater than about 5 wt% coarse scalenohedral PCC (relative to the weight of the feed material) as a seed material may yield a larger or coarser PCC product, and may result in a greater surface area. For example, using less than about 5% of a fine rhombohedral PCC as a seed material yields a PCC product with a finer crystal size within a PCC aggregate, whereas greater than about 5% of the fine rhombohedral PCC seed material yields a finer-sized aggregate of the PCC produced. Further, under seeding conditions where a pure calcite seed (where dolomite or magnesium levels are <2%) is added to the reacting mixture, the resulting PCC product is formed with a rhombic geometry. Similarly, seeding with magnesite or dolomite also yields rhombic PCC.

In the present disclosure, a "hybrid structure" refers to a PCC component bound to at least a portion of a surface of a seed component. For example, the PCC component may be chemically bound to the seed component, such as, for example, through ionic, coordinate covalent (dative), or van der Waals bonds. According to some embodiments, the PCC component may physically bond or attach to the seed component. According to some embodiments, the PCC component may be adsorbed or physisorbed to the seed component. According to some embodiments, the PCC component may form a carbonate layer over the seed component during the carbonate addition step. For example, the PCC component may form a carbonate layer, shell, or coating that covers at least a portion of, majority of, or substantially all of the seed component. According to some embodiments, the PCC component may coat, enclose, or encapsulate substantially all of the seed component. According to some embodiments, the hybrid structure may include a PCC component, a seed component, and/or an interfacial component. The interfacial component may be, for example, a boundary region between the PCC component and the seed component. The interfacial component may include a chemical composition containing elements of the carbonate component and the second component. For example, when the hybrid structure includes a calcium carbonate as the PCC component and a magnesium carbonate as the seed component, an interfacial region may include calcium and/or magnesium diffusing into the other component, or a region containing a mixture of calcium carbonate and magnesium carbonate. An interfacial region may occur, for example, upon thermal treatment (e.g., sintering) of the hybrid structure.

A structure described as "amorphous" herein refers to no short or long chain order and a crystalline structure refers to at least some level of order. Materials that may be described as semi-crystalline may therefore be considered crystalline in the present disclosure. The products herein are typically not 100% crystalline or 100% amorphous or non-crystalline, but rather exist on a spectrum between these points. In some embodiments, the PCC may be predominantly amorphous or a combination of an amorphous phase and a crystalline phase (such as calcite, vaterite, or aragonite).

"Produced directly" as used herein, refers to a process where a product polymorph (e.g. calcite) is formed without the formation of an intermediate polymorph (e.g. vaterite) that is isolated, and in a second independent step, converted into the product polymorph using a processing technique mentioned herein (e.g. wet aging). In other words, "produced directly" refers to a process whereby the product is formed in one reaction operation. An example of a reaction product that is not "produced directly" may include forming an intermediate polymorph using a reaction method referred to herein, and subsequently isolating the intermediate polymorph, and subjecting it to a processing condition that converts the intermediate polymorph into a different product polymorph.

The gypsum used in the present process may be purified gypsum or unpurified gypsum. In one embodiment, the gypsum is filtered, sieved, or centrifuged to remove impurities prior to the reacting.

Exemplary processes for converting gypsum into calcite

According to another aspect, the present disclosure relates to a process for converting gypsum into precipitated calcium carbonate, involving reacting a mixture comprising gypsum and a seed, a mineral acid, or both with at least one carbonate source to produce precipitated calcium carbonate. The reactants and the seed and/or the mineral acid control the crystalline polymorph and/or particle size of the precipitated calcium carbonate, the precipitated calcium carbonate is in the form of calcite, and the calcite is produced directly from the reactants without conversion from a vaterite polymorph.

A. In one embodiment, a calcite polymorph is produced directly when the mineral acid is citric acid, nitric acid, or phosphoric acid. In alternate embodiments, the mineral acid is an acid with a pKa less than or equal to 3. In one embodiment, the gypsum starting material may include carbonate impurities, and, in this scenario, the mineral acid is added with a molar equivalence that is greater than or equal to the molar equivalence of the carbonate impurities in the gypsum. In certain embodiments, the mineral acid may be present in an amount ranging from 0.1 wt% to 20 wt%, or 0.5 wt% to 10 wt%, or 1 wt% to 5 wt% based on the dry weight of gypsum.

B. In method B, a calcite PCC product may be formed when the gypsum is treated with a mineral acid as described in reference to method A and seeded with a calcite seed. In one embodiment, less than 25% by weight of a calcium carbonate seed is added to the gypsum, for example less than 10%, less than 5%, or less than 1% by weight based on the gypsum. For instance, the seed may be present in an amount ranging from 0.1 % to 25%, or 0.5 to 15%, or 1% to 10% by weight based on the gypsum. In one embodiment, the PCC produced has a dominant crystal polymorph consistent with calcite, with a geometry comprising rhombic. In another embodiment, the PCC produced has a PSD ($d_{50}$) ranging from 1-28 microns. In another embodiment, the PCC has a steepness ($d_{30}/d_{70}$x100) in a range from 30-100, or 53-71, or 59-63. In another embodiment, the PCC has a surface area (BET and/or stearic acid uptake) ranging from 1-30, or from 3-9 $m^2$/g. According to some embodiments, the PCC may have a relatively steep particle size distribution, for example, a steepness greater than about 46. According to some embodiments, the PCC may have a relatively broad particle size distribution, for example, a steepness less than about 40.

C. In one embodiment, a calcite polymorph PCC is produced when the seed is a calcite seed. In some embodiments, at least 25% by weight of calcium carbonate is added to the gypsum, at least 5%, at least 2%, or at least 1 % by weight based on the gypsum. For instance, the seed may be present in an amount ranging from 1 % to 25%, or 2 to 30%, or 5% to 40% by weight based on the gypsum. In one embodiment, the PCC produced has a dominant crystal polymorph consistent with calcite, with a geometry comprising rhombic. In another embodiment, the PCC has a surface area ranging from 0.1-8, or from 2.5-30 $m^2$/g.

D. The seed may also be at least one selected from the group consisting of dolomite, dolomitic carbonate, magnesium sulfate, magnesium hydroxide, titania, silica, and zinc oxide. For example, the seed may be dolomitic calcium carbonate. In some embodiments, the PCC produced may have a crystal geometry including needle forms of rhombic calcite, as well as other forms. Further, the PCC may have a hybrid structure when seeded with a non-PCC seed material, such as, for example, titania, silica, zinc oxide, or mixtures thereof. In some embodiments, the gypsum may be seeded with magnesium sulfate and/or magnesium hydroxide instead of calcium carbonate.

E. The additive may be, but is not limited to a buffer, a dispersant, a thickener, an anticaking agent, a defoamer, a rheology agent, a wetting agent, a crystal seed, a co-solvent, a brightness enhancer, or any agent that affects crystal morphology/geometry of the product. Examples of additives include, but are not limited to, citric acid, phosphoric acid, a sugar, $BaCl_2$, $MgO$, $MgCO_3$, $H_2SO_4$, $H_3PO_4$, HCl, various phosphates, sodium hexametaphosphate, ammonium sulfate, sodium thiosulfate, and $NO_3$ compounds. Examples of brightness enhancers include, but are not limited to, fluorescent brightening agents. According to some embodiments, when the additive is an acid, such as, for example, citric acid, the surface area of a resulting PCC morphology may be increased. The selection of the acid, such as, for example, phosphoric acid, may be used in varying amounts to control the shape, particle size, and/or surface area of the PCC. In one embodiment, a calcite polymorph is produced when the mixture further comprises citric acid, phosphoric acid, ammonium sulfate, or sodium thiosulfate. In one embodiment, the weight % of the additive ranges from 0.1 % to 20%, or 0.5% to 10%, or 1 % to 6% relative to the gypsum. In some embodiments, ammonium sulfate is added to the reaction mixture to control the reaction rate. In some embodiments, sodium thiosulfate is added instead of ammonium sulfate. For example, the ammonium sulfate may be added to a gypsum slurry. The concentration of ammonium sulfate may be varied to control the PCC polymorph type and particle size.

F. The carbonate source may be at least one selected from the group consisting of ammonium carbonate, ammonium bicarbonate, ammonium carbamate, calcium carbonate, dolomite, a metal carbonate, and carbon dioxide. When a mixture of ammonium carbonate is in solution with gypsum, and the reaction takes place in solution, the PCC product tends to be calcite. In one embodiment, the carbonate source is a carbonate mixture of ammonium carbonate, ammonium carbamate, and ammonium bicarbonate, and the amount of ammonium bicarbonate is greater than or equal to the amount of ammonium carbamate or ammonium carbonate in the carbonate mixture. In one embodiment, ammonium bicarbonate is added to the ammonium carbonate (or vice versa) to generate a mixture, and the mixture is then added to the gypsum. In another embodiment, $CO_2$ gas is bubbled into a slurry containing ammonium hydroxide, and the bubbling results in the formation of ammonium carbonate, and ammonium bicarbonate and/or ammonium carbamate in situ, and the resulting mixture of ammonium carbonate, ammonium carbamate and ammonium bicarbonate is then added to the gypsum.

In certain embodiments, the reaction temperature may be equal to or greater than 30°C and the polymorph formed is calcite.

In other embodiments, the gypsum is a natural gypsum and the polymorph formed is a calcite and/or vaterite product. For instance, the calcium carbonate product may comprise at least 30% calcite and vaterite.

In certain embodiments, the reaction is carried out at a pH equal to or greater than 10 and the polymorph formed is calcite.

H. In one embodiment, the carbonate source is carbon dioxide and the carbon dioxide is reacted with ammonia or ammonium hydroxide prior to or during reacting with the mixture comprising gypsum and a seed, a mineral acid, or both. The pH of the mixture is tailored to a pH equal to or greater than 10, which may result in the formation of a calcite polymorph. In the process, the pH can be adjusted by adjusting the concentration of the carbon dioxide or the ammonia. In the present disclosure, the amount of carbonate source added may be greater than the amount of gypsum present in the mixture, where the molar ratio of the gypsum to the carbonate source ranges from about 1:1.1 to 1:5, 1:1.3 to 1:2.5, or from about 1:1.5 to 1:2. The carbon dioxide can be pure carbon dioxide gas, flue gas containing 15-90% carbon dioxide gas, or flue gas with enriched carbon dioxide gas (e.g., greater than 90% $CO_2$). In one embodiment, the gypsum is mixed with ammonia prior to the addition of $CO_2$. Ammonium hydroxide may be pre-formed by addition of ammonia to water, and the ammonium hydroxide may be fed into slurried gypsum prior to addition of $CO_2$. Alternatively, ammonium carbonate may be fully generated, then introduced to the slurried gypsum for reaction. Reacting ammonium hydroxide with $CO_2$ at room temp to 40°C gives a mixture of ammonium carbonate and ammonium bicarbonate, which may react as anticipated with seeded gypsum to produce calcite. In presence of gypsum, ammonium hydroxide with $CO_2$ yields a mixture of ammonium carbonate and ammonium bicarbonate, which begins to react with gypsum and yield ammonium sulfate during ammonium bicarbonate and ammonium carbonate generation. In an alternative embodiment, ammonia and $CO_2$ are first mixed and reacted, and then the reacted mixture is mixed with the gypsum. In one embodiment, the $CO_2$ is added by bubbling into solution. In an alternative embodiment, $CO_2$ is added as dry ice. During the preparation, the nucleation rate and crystal size of calcium carbonate can be controlled through controlling of the reaction time and temperature. In a certain embodiment, the carbon dioxide, or carbon dioxide equivalent is equimolar or greater to the gypsum reactant. The reaction time may be 0.2-10 hours, or 0.5-3 hours, and the temperature may be in a range from 8-98° C, or from 10-90°C. According to some embodiments, a $CO_2$-containing gas, such as a flue gas, may be continuously added during the reaction period with the ammonia. According to some embodiments, the addition of a $CO_2$-containing gas may be stopped during the reaction period with the ammonia. When the $CO_2$ addition is stopped, it may be optionally restarted prior to a filtration step. According to some embodiments, the reaction products may be stored before separating the carbonate from ammonium sulfate to allow for ripening of the reaction products. The ripening could be performed with or without the addition of $CO_2$ during the storage. According to some embodiments, the $CO_2$ may be added after the conversion to calcium carbonate and ammonium sulfate. According to some embodiments, the $CO_2$ may be added after isolating the calcium carbonate. According to some embodiments, the introduction

of $CO_2$, such as, for example, after isolating the calcium carbonate or after a reslurrying step, may be used to control the particle size of the calcium carbonate.

I. In an alternative embodiment, the carbonate source is an alkali metal carbonate, which is sodium, potassium, cesium, lithium, rubidium, francium. In one embodiment, the metal of the metal carbonate is a monovalent ion (e.g., an alkali metal). In one embodiment, the PCC produced may have a crystal geometry including needle forms of aragonite, rhombic calcite, and other forms. In one embodiment, the metal of the metal carbonate is a divalent ion, such as, for example, magnesium, strontium, beryllium, barium, or radium. Magnesium carbonate may also be yielded under conditions where magnesium cation is present in the gypsum or in the metal carbonate (e.g. magnesium carbonate, dolomite, etc.).

The process for converting gypsum into precipitated calcium carbonate further includes processing the precipitated calcium carbonate by at least one method selected from the group consisting of dewatering, drying, ageing, surface treating, size reducing, and beneficiating. Processing PCC with a calcite polymorph may change the aforementioned properties of the calcite. However, the processing does not convert calcite into another polymorph.

Exemplary processes for converting gypsum into aragonite

According to a first aspect, the present disclosure relates to a process for converting gypsum into precipitated calcium carbonate, involving reacting a mixture comprising gypsum and a seed, a mineral acid, or both with at least one carbonate source to produce precipitated calcium carbonate. The reactants and the seed and/or the mineral acid control the crystalline polymorph and/or particle size of the precipitated calcium carbonate, the precipitated calcium carbonate is in the form of aragonite, and the aragonite is produced directly from the reaction without conversion from a vaterite polymorph.

C. In one embodiment, an aragonite polymorph PCC is produced when the seed is aragonite or a blended seed. The blended seed may comprise magnesium carbonate and calcium carbonate, for instance, blended at a ratio of 5:1 or more preferably 3:1. In some embodiments, at least 10% by weight of seed is added to the gypsum, at least 5%, at least 2%, or at least 1% by weight based on the gypsum. For instance, the seed may be present in an amount ranging from 1% to 25%, or 2 to 30%, or 5% to 40% by weight based on the gypsum. In one embodiment, the PCC produced has a dominant crystal polymorph consistent with aragonite. In another embodiment, the PCC has a surface area ranging from 2 to 30 $m^2/g$, or from 5 to 15 $m^2/g$, or from 2 to 8 $m^2/g$.

D. The seed may also be at least one selected from the group consisting of dolomitic carbonate, magnesium sulfate, magnesium hydroxide, titania, silica, strontium and zinc oxide. For example, the seed may be dolomitic calcium carbonate of high magnesium content. Further, the PCC may have a hybrid structure when seeded with a non-PCC seed material, such as, for example, titania, silica, zinc oxide, strontium or mixtures thereof. In some embodiments, the gypsum may be seeded with magnesium sulfate and/or magnesium hydroxide instead of a carbonate.

E. The additive may be, but is not limited to a buffer, a dispersant, a thickener, an anticaking agent, a defoamer, a rheology agent, a wetting agent, a crystal seed, a co-solvent, a brightness enhancer, or any agent that affects crystal morphology/geometry of the product. Examples of additives include, but are not limited to, citric acid, phosphoric acid, a sugar, $BaCl_2$, MgO, $MgCO_3$, $H_2SO_4$, $H_3PO_4$ HCl, various phosphates, sodium hexametaphosphate, ammonium sulfate, sodium thiosulfate, and $NO_3$ compounds. Examples of brightness dampeners include, but are not limited to, $Fe_2O_2$, MnO, and $Pb^{+2}$. According to some embodiments, when the additive is an acid, such as, for example, citric acid, the surface area of a resulting PCC morphology may be increased. The selection of the acid, such as, for example, phosphoric acid, may be used in varying amounts to control the shape, particle size, and/or surface area of the PCC. In one embodiment, the weight % of the additive ranges from 0.1% to 25%, or 0.5 to 15%, or 1% to 10% relative to the gypsum. In some embodiments, ammonium sulfate is added to the reaction mixture to control the reaction rate. In some embodiments, sodium thiosulfate is added instead of ammonium sulfate. For example, the ammonium sulfate may be added to a gypsum slurry. The concentration of ammonium sulfate may be varied to control the PCC polymorph type and particle size.

F. The carbonate source may be at least one selected from the group consisting of ammonium carbonate, ammonium bicarbonate, ammonium carbamate, calcium carbonate, dolomite, a metal carbonate, and carbon dioxide. In one embodiment, ammonium bicarbonate is added to the ammonium carbonate (or vice versa) to generate a mixture, and the mixture is then added to the gypsum. In another embodiment, $CO_2$ gas is bubbled into a slurry containing ammonium hydroxide, and the bubbling results in the formation of ammonium carbonate, and/or ammonium bicarbonate and/or ammonium carbamate in situ, and the resulting mixture of ammonium carbonate, ammonium carbamate and ammonium bicarbonate is then added to the gypsum.

H. In one embodiment, the carbonate source is carbon dioxide and the carbon dioxide is reacted with ammonia or ammonium hydroxide prior to or during reacting with the mixture comprising gypsum and a seed, a mineral acid, or both. In the process, the pH can be adjusted by adjusting the concentration of the carbon dioxide or the ammonia. In the present disclosure, the amount of carbonate source added may be greater than the amount of gypsum present in the mixture, where the molar ratio of the gypsum to the carbonate source ranges from about 1:1.1 to 1:5, 1:1.3 to 1:2.5, or from about 1:1.5 to 1:2. The carbon dioxide can be pure carbon dioxide gas, flue gas containing 15-90% carbon dioxide gas, or flue gas with enriched carbon dioxide gas (e.g., greater than 90% $CO_2$). In one embodiment, the gypsum is mixed with ammonia prior to the addition of $CO_2$. Ammonium hydroxide may be pre-formed by addition of ammonia to water, and the ammonium hydroxide may be fed into slurried gypsum (or vice versa) prior to addition of $CO_2$. Alternatively, ammonium carbonate or ammonium carbonate with ammonium bicarbonate may be fully generated, then introduced to the slurried gypsum for reaction. In the presence of gypsum, ammonium hydroxide with $CO_2$ yields ammonium bicarbonate and ammonium carbonate, which begins to react with gypsum and yield ammonium sulfate during ammonium bicarbonate and ammonium carbonate generation. In an alternative embodiment, ammonia and $CO_2$ are first mixed and reacted, and then the reacted mixture is added to the gypsum. In one embodiment, the $CO_2$ is added by bubbling into solution. In an alternative embodiment, $CO_2$ is added as dry ice. During the preparation, the nucleation rate and crystal size of calcium carbonate can be controlled through control of the reaction time and temperature. In a certain embodiment, the carbon dioxide, or carbon dioxide equivalent is equimolar or greater to the gypsum reactant. The reaction time may be 0.2-10 hours, or 0.5-3 hours, and the temperature may be in a range from 8-90° C, or from 10-98°C. According to some embodiments, a $CO_2$-containing gas, such as a flue gas, may be continuously added during the reaction period with the ammonia. According to some embodiments, the addition of a $CO_2$-containing gas may be stopped during the reaction period with the ammonia. When the $CO_2$ addition is stopped, it may be optionally restarted prior to a filtration step. According to some embodiments, the reaction products may be stored before separating the carbonate from ammonium sulfate to allow for ripening of the reaction products. The ripening could be performed with or without the addition of $CO_2$ during the storage. According to some embodiments, the $CO_2$ may be added after the conversion to calcium carbonate and ammonium sulfate. According to some embodiments, the $CO_2$ may be added after isolating the calcium carbonate. According to some embodiments, the introduction of $CO_2$, such as, for example, after isolating the calcium carbonate or after a reslurrying step, may be used to control the particle size of the calcium carbonate.

I. In an alternative embodiment, the carbonate source is an alkali metal carbonate, which is sodium, potassium, cesium, lithium, rubidium, francium. In one embodiment, the metal of the metal carbonate is a monovalent ion (e.g., an alkali metal). In one embodiment, the PCC produced may have a crystal geometry including needle forms of aragonite, and other forms. In one embodiment, the metal of the metal carbonate is a divalent ion, such as magnesium. Magnesium carbonate may also be yielded under conditions where magnesium cation is present in the gypsum or in the metal carbonate (e.g. magnesium carbonate, dolomite, etc.).

The process for converting gypsum into precipitated calcium carbonate further includes processing the precipitated calcium carbonate by at least one method selected from the group consisting of dewatering, drying, ageing, surface treating, size reducing, and beneficiating.

Exemplary processes for converting gypsum into vaterite

According to a second aspect, the present disclosure relates to a process for converting gypsum into precipitated calcium carbonate, including providing i) gypsum and ii) a seed, or at least one process condition selected from the group consisting of a reaction temperature between 10 and 60°C, or between 18 to 45°C, or more preferably 25 to 35°C; and reacting the gypsum with at least one carbonate source to produce precipitated calcium carbonate in the form of vaterite. The reactants and the seed and/or process conditions control the particle size of the vaterite.

The PCC produced has a dominant crystal polymorph consistent with vaterite, with a geometry comprising spherical "coral" as well as some rhombic. In some embodiments, the vaterite PCC may have a flower-shaped geometry, a rose-shaped geometry, a needle-shaped geometry, a ball-shaped or spherical-shaped geometry, or a hexagonal geometry. The geometry or structure of the vaterite may be varied by varying one or more of the reaction rate, pH, reaction temperature, or purity of the feed gypsum. For example, a feed of high-purity gypsum (e.g., 99%) yields vaterite with a ball-shaped geometry, whereas co-generating an ammonia-based carbonate precursor and the PCC tends to yield a more flower-shaped vaterite. According to some embodiments, ball-shaped vaterite PCC is produced with pre-formed ammonia-based carbonates and lower purity gypsum during the PCC reaction. The PCC produced has a PSD ($d_{50}$) ranging from 2.0-12.0, or from 3.0-7.0 microns. In another embodiment, the PCC has a steepness ($d_{30}/d_{70}$x100) ranging from 30-100, or 50-100, or 56-83, or 59-71. In another embodiment, the PCC has a surface area (BET and/or stearic acid uptake) ranging from 5-75 $m^2$/g, or from 5-20 $m^2$/g, or from 7-15 $m^2$/g.

In other embodiments, a reaction temperature of less than 30°C results in a vaterite polymorph.

E. The additive may be, but is not limited to a buffer, a dispersant, a thickener, an anticaking agent, a defoamer, a rheology agent, a wetting agent, a crystal seed, a co-solvent, a brightness enhancer or dampener, or any agent that affects crystal morphology/geometry of the product. Examples of additives include, but are not limited to, citric acid, phosphoric acid, a sugar, $BaCl_2$, $MgO$, $MgCO_3$, $H_2SO_4$, $H_3PO_4$ HCl, various phosphates, sodium hexametaphosphate, ammonium sulfate, sodium thiosulfate, and $NO_3$ compounds. Examples of brightness dampeners include, but are not limited to, $Fe_2O_2$, $MnO$, and $Pb^{+2}$ and other lead compounds. According to some embodiments, when the additive is an acid, such as, for example, citric acid, the surface area of a resulting PCC morphology may be increased. The selection of the acid, such as, for example, phosphoric acid, may be used in varying amounts to control the shape, particle size, and/or surface area of the PCC. In one embodiment, the additive is ammonium sulfate, and ammonium sulfate is present in the mixture from 0.5wttvol% to 50wt/vol%, or 2wt/vol% to 35wt/vol%, or 4% to 20% by weight. In some embodiments, ammonium sulfate is added to the reaction mixture to control the reaction rate. In some embodiments, sodium thiosulfate is added instead of ammonium sulfate. For example, the ammonium sulfate may be added to a gypsum slurry. The concentration of ammonium sulfate may be varied to control the PCC polymorph type and particle size. Alternatively, the organic acid is citric acid, and the wt% of citric acid in the mixture is greater than or equal to 0.1 %, greater than or equal to 10%, or greater than or equal to 25% relative to the weight of gypsum.

G. The carbonate source is at least one selected from the group consisting of ammonium carbonate, ammonium bicarbonate, ammonium carbamate, calcium carbonate, dolomite, a metal carbonate, and carbon dioxide. In one embodiment, the carbonate source is a carbonate mixture of ammonium carbonate, ammonium carbamate, and ammonium bicarbonate, and the amount of ammonium bicarbonate is less than the amount of ammonium carbamate or ammonium carbonate in the carbonate mixture. In general, under conditions in which the reaction between the carbonate source and gypsum takes place in a slurry, the PCC yielded is vaterite. In one embodiment, ammonium bicarbonate is added to the ammonium carbonate (or vice versa) to generate a mixture, and the mixture is then added to the gypsum. In another embodiment, $CO_2$ gas is bubbled into a slurry containing ammonium hydroxide, and the bubbling results in the formation of ammonium carbonate and/or ammonium carbamate, and ammonium bicarbonate in situ, and the resulting mixture of ammonium carbonate, ammonium carbamate and ammonium bicarbonate is then added to the gypsum.

H. In yet another embodiment, the carbonate source is carbon dioxide and the carbon dioxide is reacted with ammonia or ammonium hydroxide prior to or during reacting with the mixture comprising gypsum and a seed, a mineral acid, or both. The pH of the mixture is tailored to a pH of less than 10, which results in formation of a vaterite polymorph. The carbon dioxide can be pure carbon dioxide gas, flue gas containing 15-90% carbon dioxide gas, or flue gas with enriched carbon dioxide gas (e.g., greater than 90% $CO_2$). In one embodiment, the gypsum is mixed with ammonia prior to the addition of $CO_2$. Ammonium hydroxide may be pre-formed by addition of ammonia to water, and the ammonium hydroxide may be fed into slurried gypsum prior to addition of $CO_2$. In an alternative embodiment, ammonia and $CO_2$ are first mixed and reacted, and then the reacted mixture is added to the gypsum. Reacting ammonium hydroxide with $CO_2$ at room temp or up to at least 40°C gives a mixture of ammonium carbonate and ammonium bicarbonate, which reacts as anticipated with unseeded gypsum to give vaterite. Alternatively, ammonium carbonate may be fully generated, then introduced to the slurried gypsum for reaction. In presence of gypsum, ammonium hydroxide with $CO_2$ yields ammonium carbonate and ammonium bicarbonate, which begins to react with gypsum and yield ammonium sulfate during ammonium bicarbonate and ammonium carbonate generation. In one embodiment, the $CO_2$ is added by bubbling into solution. In an alternative embodiment, $CO_2$ is added as dry ice. During the preparation, the nucleation rate and crystal size of calcium carbonate can be controlled through controlling of the reaction time and temperature. In a certain embodiment, the carbon dioxide, or carbon dioxide equivalent is equimolar or greater to the gypsum reactant. The reaction time is 0.2-10 hours, or 0.5-3 hours, and the temperature is in a range from 8-90° C, or from 10-98°C. According to some embodiments, a $CO_2$-containing gas, such as a flue gas, may be continuously added during the reaction period with the ammonia. According to some embodiments, the addition of a $CO_2$-containing gas may be stopped during the reaction period with the ammonia. When the $CO_2$ addition is stopped, it may be optionally restarted prior to a filtration step. According to some embodiments, the reaction products may be stored before separating the carbonate from ammonium sulfate to allow for ripening of the reaction products. The ripening could be performed with or without the addition of $CO_2$ during the storage. According to some embodiments, the $CO_2$ may be added after the conversion to calcium carbonate and ammonium sulfate. According to some embodiments, the $CO_2$ may be added after isolating the calcium carbonate. According to some embodiments, the introduction of $CO_2$, such as, for example, after isolating the calcium carbonate or after a reslurrying step, may be used to control the particle size of the calcium carbonate.

I. In an alternative embodiment, the carbonate source is an alkali metal carbonate, such as sodium carbonate, potassium, cesium, lithium, rubidium, or francium based carbonate. In one embodiment, the metal of the metal carbonate is a monovalent ion (e.g., an alkali metal). In one embodiment, the PCC produced may have a crystal geometry including, for example, spherical vaterite. In one embodiment, the metal of the metal carbonate is a divalent ion, such as magnesium, strontium, beryllium, barium, or radium. Magnesium carbonate may also be yielded under conditions where magnesium cation is present in the gypsum or in the metal carbonate (e.g. magnesium carbonate, dolomite, etc.).

The process for converting gypsum into precipitated calcium carbonate further includes processing the vaterite by at least one method selected from the group consisting of dewatering, drying, ageing, surface treating, size reducing, and beneficiating, wherein the processing converts the vaterite into a calcite or aragonite polymorph. In one embodiment, seeding a vaterite PCC with ground calcium carbonate (GCC) in water with a pH ranging from 4 to 9, or 5 to 8, or 6 to 7.7 converts the vaterite into a calcite polymorph. For this conversion, a GCC seed is provided in 0.1 wt% to 25 wt%, or 0.5 wt% to 15 wt%, or 1 wt% to 10 wt% relative to the vaterite, and the temperature is maintained at less than 35°C. Further, vaterite can be converted to a calcite polymorph by adding ammonium hydroxide or other bases, such as sodium hydroxide, potassium hydroxide or calcium hydroxide to a mixture of vaterite and water, and adjusting the pH to be greater than or equal to 10, or greater than or equal to 10.5, or greater than or equal to 11. For this conversion process, the temperature is maintained at a temperature in a range between about 23 °C and about 80 °C, between about 25 °C and about 50 °C, or between about 30 °C and about 40 °C. According to some embodiments, the conversion process temperature may be maintained for a time period in a range from about 30 minutes to about 12 hours. According to some embodiments, substantially all of the vaterite may be converted into calcite. In one embodiment, the addition of 2 to 10%, 4 to 9%, or 6 to 8% of ammonium bicarbonate to vaterite PCC also aids in conversion to a calcite polymorph. In terms of converting vaterite into calcite, the vaterite and water mixture may be in the form of a wet cake or a slurry. In contrast, drying of the vaterite stabilizes the vaterite polymorph and prevents it from converting to calcite.

Alternatively, the vaterite may be stabilized by the presence of ammonium sulfate, and/or the presence of iron materials, or the absence of ammonium bicarbonate and ammonium sulfate. For instance, the vaterite may be stabilized by the presence of ammonium sulfate even when ammonium bicarbonate is present such that the ammonium bicarbonate to ammonium sulfate ratio is between [0:100] and [1:15]. In certain embodiments, the vaterite may be stabilized for 1 day, or 1 week, or a month or longer.

According to a third aspect, the present disclosure relates to a process for converting gypsum into precipitated calcium carbonate involving providing a gypsum, and reacting the gypsum with at least one carbonate source to produce precipitated calcium carbonate in the form of vaterite, such that i) the pH of the wet vaterite is less than or equal to 8, ii) the vaterite is dried.

Precipited calcium carbonate (PCC)-morphologies and properties

In the present disclosure, the crystalline content of a PCC composition may be readily determined through visual inspection by use of, for example, a scanning electron microscope or by x-ray diffraction. Such determination may be based upon the identification of the crystalline form and is well known to those of skill in the art.

The PCC compositions of the present disclosure are characterized by a single crystal polymorph content of greater than or equal to 30% by weight relative to the total weight of the composition, greater than or equal to 40% by weight, greater than or equal to 60% by weight, greater than or equal to about 80% by weight, or greater than or equal to about 90% by weight.

The PCC compositions may also be characterized by their particle size distribution (PSD). As used herein and as generally defined in the art, the median particle size (also called $d_{50}$) is defined as the size at which 50 percent of the particle weight is accounted for by particles having a diameter less than or equal to the specified value.

The PCC compositions may have a $d_{50}$ in a range from about 0.1 microns to about 30 microns, for example, from about 2 microns to about 14 microns, from about 2 to about 8 microns, from about 1 micron to about 4 microns, or from about 0.1 micron to about 1.5 microns. The $d_{50}$ may vary with the morphology of the PCC. For example, calcite PCC may have a $d_{50}$ in a range from about 1 to about 28 microns, such as, for example, from about 1 to about 2 microns, from about 1 to about 5 microns, from about 2 to about 4 microns, or from about 4 to about 6 microns. Vaterite PCC may have a $d_{50}$ in a range from about 0.1 microns to about 30 microns, such as, for example, from about 0.1 to about 2 microns, from about 1 to about 5 microns, or from about 2 to about 8 microns.

According to some embodiments, between about 0.1 percent and about 60 percent of the PCC particles are less than about 2 microns in diameter. In other embodiments, between about 55 percent and about 99 percent of the PCC particles are less than 2 microns in diameter. According to some embodiments, less than about 1 percent of the PCC particles are greater than 10 microns in diameter, such as, for example, less than 0.5 percent of the PCC particles are greater than 10 microns in diameter, or less than 0.1% of the PCC particles are greater than 10 microns in diameter.

The PCC compositions may be further characterized by their aspect ratio. As used herein, aspect ratio refers to a shape factor and is equal to the largest dimension (e.g. length) of a particle divided by the smallest dimension of the particle orthogonal to it (e.g. width). The aspect ratio of the particles of a PCC composition may be determined by various methods. One such method involves first depositing a PCC slurry on a standard SEM stage and coating the slurry with platinum. Images are then obtained and the particle dimensions are determined, using a computer based analysis in which it is assumed that the thickness and width of the particles are equal. The aspect ratio may then be determined by averaging fifty calculations of individual particle length-to-width aspect ratios.

The PCC compositions may also be characterized in terms of their cubicity, or the ratio of surface area to particle size (i.e., how close the material is to a cube, rectangular prism, or rhombohedron). In certain embodiments of the present disclosure, a lower surface area is advantageous. Smaller particles typically have much higher surface area, but small particle size is advantageous for many different applications. Thus PCC products with small particle size material and lower than "normal" surface area are particularly advantageous. Rhombic crystal forms are generally preferred in terms of cubicity.

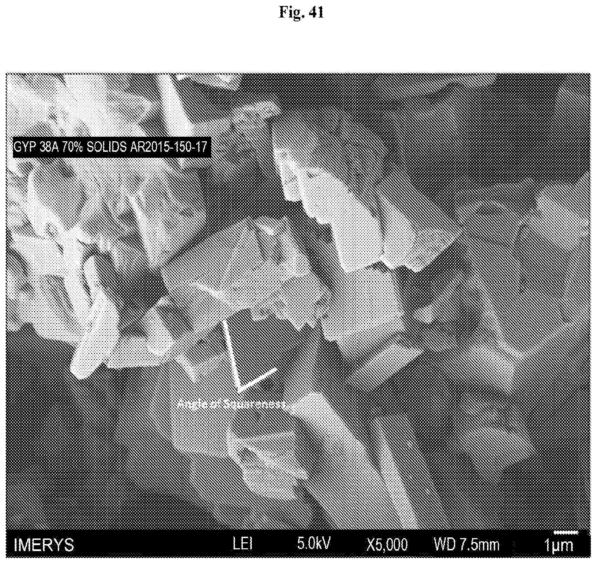

According to some embodiments, the cubic nature of the PCC compositions may be determined by the "squareness" of the PCC particles. A squareness measurement generally describes the angles formed by the faces of the PCC particle. Squareness, as used herein, can be determined by calculating the angle between adjacent faces of the PCC, where the faces are substantially planar. Squareness may be measured using SEM images by determining the angle formed by the edges of the planar faces of the PCC particle when viewed from a perspective that is parallel to the faces being measured. Fig. 41 shows an exemplary measurement of squareness. According to some embodiments, the PCC compositions may have a squareness in a range from about 70 degrees to about 110 degrees.

In the present disclosure, the monodispersity of the product refers to the uniformity of crystal size and polymorphs. The steepness ($d_{30}/d_{70}$x100) refers to the particle size distribution bell curve, and is a monodispersity indicator. $d_x$ is the equivalent spherical diameter relative to which x% by weight of the particles are finer. According to some embodiments, the PCC compositions may have a steepness in a range from about 30 to about 100, such as, for example, in a range from about 33 to about 100, from about 42 to about 76, from about 44 to about 75, from about 46 to about 70, from about 50 to about 66, from about 59 to about 66, or from about 62 to about 65. According to some embodiments, the PCC compositions may have a steepness in a range from about 20 to about 71, such as, for example, in a range from about 25 to about 50. In some embodiments, the steepness may vary according to the morphology of the PCC. For example, calcite may have a different steepness than vaterite.

According to some embodiments, the PCC compositions may have a top-cut ($d_{90}$) particle size less than about 25 microns, such as, for example, less than about 17 microns, less than about 15 microns, less than about 12 microns, or less than about 10 microns. According to some embodiments, the PCC compositions may have a top-cut particle size in a range from about 2 microns to about 25 microns, such as, for example, in a range from about 15 microns to about 25 microns, from about 10 microns to about 20 microns, or from about 3 microns to about 15 microns.

According to some embodiments, the PCC compositions may have a bottom-cut ($d_{10}$) particle size less than about 4 microns, such as, for example, less than about 2 microns, less than about 1 micron, less than about 0.7 microns, less than about 0.5 microns, less than 0.3 microns, or less than 0.2 microns. According to some embodiments, the PCC compositions may have a bottom-cut particle size in a range from about 0.1 micron to about 4 microns, such as, for example, in a range from about 0.1 micron to about 1 micron, from about 1 micron to about 4 microns, or from about 0.5 microns to about 1.5 microns.

The PCC compositions may additionally be characterized by their BET surface area. As used herein, BET surface area refers to the Brunauer-Emmett-Teller (BET) explaining the physical adsorption of gas molecules on a solid surface. It refers to multilayer adsorption, and usually adopts non-corrosive gases (i.e. nitrogen, argon, carbon dioxide and the like) as adsorbates to determine the surface area data. The BET surface area may vary according to the morphology of the PCC. According to some embodiments, the PCC may have a BET surface area less than 80 $m^2$/g, such as, for example, less than 50 $m^2$/g, less than 20 $m^2$/g, less than 15 $m^2$/g, less than 10 $m^2$/g, less than 5 $m^2$/g, less than 4 $m^2$/g, or less than 3 $m^2$/g. In some embodiments, the calcite PCC composition particles may have a BET surface area in a range from 1 to 30 $m^2$/g, such as, for example, from 2 to 10 $m^2$/g, from 3 to 6.0 $m^2$/g, from 3 to 5.0 $m^2$/g. In other embodiments, calcite PCC may have a BET surface area in a range from 1 to 6 $m^2$/g, from 1 to 4 $m^2$/g, from 3 to 6 $m^2$/g, or from 1 to 10 $m^2$/g, from 2 to 10 $m^2$/g, or from 5 to 10 $m^2$/g. According to some embodiments, calcite PCC may have a BET surface area less than or equal to 30 $m^2$/g. Vaterite PCC may have a BET surface area in a range from 5 to 75 $m^2$/g. In certain embodiments, the vaterite PCC composition particles have a BET surface area in a range from 7 to 18 $m^2$/g, from 5 to 20 $m^2$/g, or from 7 to 15 $m^2$/g. In some embodiments, aragonite PCC may have a BET surface area in the range from 2 to 30 $m^2$/g.

The PCC compositions may additionally be characterized by the ratio of BET surface area to $d_{50}$. In a certain embodiment, the vaterite PCC composition particles have a ratio of BET surface area to $d_{50}$ of 1-6.5, 2-5.5, or 2.5-5. In another embodiment, the calcite PCC composition particles have a ratio of BET surface area to $d_{50}$ of 0.6-2, 0.7-1.8, or 0.8-1.5.

The PCC compositions may additionally be characterized by their stearic acid uptake surface area. As used herein, stearic acid uptake surface area refers to a surface treatment of the PCC compositions with stearic acid. Under controlled conditions, the stearic acid may form a monolayer on the surface of the PCC and thus provide information regarding the surface area via adsorption or uptake of stearic acid. The stearic acid uptake surface area may vary according to the morphology of the PCC. According to some embodiments, the PCC may have a stearic acid uptake surface area less than 80 m$^2$/g, such as, for example, less than 75 m$^2$/g, less than 50 m$^2$/g, less than 20 m$^2$/g, less than 15 m$^2$/g, less than 10 m$^2$/g, less than 5 m$^2$/g, less than 4 m$^2$/g, or less than 3 m$^2$/g.

In some embodiments, the yield of PCC using the process herein is greater than 50%, greater than 60%, greater than 80%, or greater than 90%.

The PCC compositions of the present disclosure may be in any desired form, including but not limited to, powders, crystalline solids, or in dispersed form, i.e., the PCC compositions may be dispersed in a liquid, such as in an aqueous medium. In one embodiment, the dispersed PCC composition comprises at least about 50% PCC by weight relative to the total weight of the dispersion, at least about 70% PCC by weight. The dispersed PCC composition may comprise at least one dispersing agent, which may be chosen from dispersing agents now known in the art or hereafter discovered for the dispersion of PCC. Examples of suitable dispersing agents include, but are not limited to: polycarboxylate homopolymers, polycarboxylate copolymers comprising at least one monomer chosen from vinyl and olefinic groups substituted with at least one carboxylic acid group, and water soluble salts thereof. Example of suitable monomers include, but are not limited to, acrylic acid, methacrylic acid, itaconic acid, crotonic acid, fumaric acid, maleic acid, maleic anhydride, isocrotonic acid, undecylenic acid, angelic acid, and hydroxyacrylic acid. The at least one dispersing agent may be present in the dispersed PCC composition in an amount ranging from about 0.01 % to about 2%, from about 0.02% to about 1.5% by weight relative to the total weight of the dispersion.

FGD gypsum and gypsum obtained from natural calcium carbonate sources typically contain contaminants and is of low whiteness and brightness. Major contributors to discoloration may include insoluble impurities, such as pyrite and various organic species. In the present disclosure, gypsum may be pretreated prior to reaction with a carbonate source. In one embodiment, this pretreatment includes, but is not limited to, a filtration or sieving step and/or a mineral acid treatment step. The filtration method may be, but is not limited to vacuum filtration.

Fully dissolved gypsum may be filtered or centrifuged to remove the impurities that result in low whiteness and brightness. The filtration method may be, but is not limited to vacuum filtration, but may refer to any dewatering process common to the art. Furthermore, large contaminants may be removed from the gypsum by sieving. Alternatively, a mineral acid, such as nitric acid, may be employed to improve whiteness and brightness of the gypsum by removing species causing discoloration. A mineral acid may also be employed to remove remaining carbonate species in the gypsum. Therefore, in terms of methods A and B wherein mineral acid is added to remove excess carbonate, additional mineral acid may be added to remove non-carbonate contaminants. Additionally, the mineral acid addition step of methods A and B to remove carbonate impurities may be different from the mineral acid used to remove contaminants resulting in low whiteness and brightness, and the step to remove carbonate impurities may take place prior to the step to remove contaminants resulting in low whiteness and brightness, and vice versa. Thus, it is envisioned within the scope of the present disclosure that in methods A - I, the method may be modified to include a step for removing impurities and/or improving the whiteness and brightness of the gypsum by filtering from the fully dissolved gypsum, sieving, and/or utilizing a mineral acid. According to some embodiments, the PCC compositions may have low ionic impurities. According to some embodiments, the low ionic impurities may improve the electrical properties of the PCC or a finished product containing the PCC. It is envisioned that this pretreatment step is performed prior to reacting gypsum with the carbonate source, additive, or seed and that a gypsum of improved whiteness and brightness may yield, after reaction with a carbonate source, a PCC product of whiteness and brightness similar to that of the cleaned gypsum. Polymorph and particle size of the PCC yielded may be controlled using methods disclosed herein, in one or more of their embodiments.

Brightness refers to a measure of directional reflectance from a material of light at a certain wavelength or certain wavelengths. As used herein, ISO brightness refers to an ISO standard that quantifies the brightness of a substantially white or near-white material (i.e. paper) as it would be perceived in an environment that is illuminated with a mixture of cool-white fluorescence and some filtered daylight, specifically blue light of specific spectral and geometric characteristics, generally ~457 nm. In some embodiments, the ISO brightness may be determined by a standard test for brightness, such as ASTM D985-97. According to some embodiments, the PCC compositions or paper or paperboard materials comprising them may have an ISO brightness greater than or equal to 54, such as, for example, greater than or equal to 65, greater than or equal to 85, greater than or equal to 88, greater than or equal to 90, greater than or equal to 92, or greater than or equal to 95. According to some embodiments, the PCC compositions have a consistent or homogeneous brightness across the PCC particles.

Rhombic precipitated calcium carbonate of a particular size distribution can be yielded from gypsum by reacting with ammonium carbonate in the presence of a calcium carbonate crystal seed and by controlling reaction parameters as disclosed herein. Rhombic PCC generated from this method has similar properties to either rhombic produced by traditional methods or ground calcium carbonate (GCC).

Reaction of gypsum with carbonate in the presence or absence of additives to yield the rhombic PCC can be carried out in a batch or continuous process. Specific selection of reaction conditions aid in fine-tuning the properties of the PCC generated. The following may be controlled for rhombic PCC production disclosed herein: concentration of gypsum and other reactants, starting temperature for each reactant, reaction temperature and reaction time, drying temperature, annealing temperature for generated PCC where employed, selection and maintenance of pH and ionic strength for each solution, addition rate of each added component, and rate of $CO_2$ addition, where employed.

PCC may be surface treated with stearic acid, other stearate or hydrocarbon species to yield a specific level of hydrophobicity. Hydrophobicity may be measured using a moisture uptake (MPU) technique, in which a PCC powder is exposed to a high relative humidity atmosphere for 24h or longer and the weight change due to water sorption is recorded. In general, the maximum reduction in MPU achievable by surface treatment is particularly advantageous. Hydrophobicity may also be measured by contact angle, in which a droplet of a test liquid (e.g. water) is placed on a PCC powder and is observed to see whether the droplet is absorbed (wets) or gives a stable droplet with a measurable contact angle. Surface treatments may involve dry or wet coating with a $C_6$-$C_{22}$ fatty acid or fatty acid salt. Such treatments are well-known in the art, and in addition to stearic acid, include such materials as ammonium stearate, sodium stearate, palmitic acid, and others. The fatty acid/ fatty acid salt is provided in sufficient quantity to coat a substantial portion of the surface of the majority of PCC particles. The amount of hydrophobizing agent needed to coat a substantial portion of the PCC surface is related to the PCC surface area. In one embodiment, a calcite PCC of this disclosure requires 0.5-1.0% hydrophobizing agent to coat the surface. In another embodiment, a vaterite PCC requires 2.0-3.0% hydrophobizing agent to coat the surface. Treated and untreated PCC or blends thereof, of single or blended size distributions can be used in a variety of applications, including adhesives and sealants as a rheology modifier, in paints and ink for opacity and as an extender, as a paper filler, for surface finishing and brightness, a functional filler in plastics and as an extender. According to some embodiments, the hydrophobizing agent may form a monolayer on the surface of the PCC. According to some embodiments, the amount of hydrophobizing agent may be in a range from about 0.15 $m^2$/g to about 18 $m^2$/g to coat the particles, such as, for example, in a range from about 0.15 $m^2$/g to about 8 $m^2$/g or from about 10 $m^2$/g to about 17 $m^2$/g. The amount of hydrophobizing agent may be dependent on the morphology of the PCC. For example, calcite PCC may have an amount of hydrophobizing agent in a range from about 0.15 $m^2$/g to about 20 $m^2$/g to coat the particles, and vaterite PCC may have an amount of hydrophobizing agent in a range from about 10 $m^2$/g to about 80 $m^2$/g to coat the particles.

In some embodiments, a size reduction method is employed either in situ or on the product after recovery. A size reduction method may include sonication or grinding. Since the products appear to exhibit 'substructure' that is most likely interpretable as aggregation, a size reduction method may break apart the aggregates into their constituent building blocks. According to some embodiments, ultrasound may be used to break down agglomerates.

According to some embodiments, the PCC may be beneficiated by grinding or milling. In some embodiments, the beneficiation may include one or more of magnetic separation, bleaching, or acid washing. The separation, bleaching, or acid washing may occur before the grinding/milling, after the grinding/milling, or both.

The PCC compositions of the present disclosure may optionally comprise at least one added pigment. Suitable pigments are those now known or that may be hereafter discovered. Exemplary pigments include, but are not limited to, titanium dioxide, calcined clays, delaminated clays, talc, calcium sulfate, other calcium carbonate, kaolin clays, calcined kaolin, satin white, plastic pigments, aluminum hydrate, and mica.

The pigment may be present in the PCC compositions of the present disclosure in an amount less than about 70% by weight relative to the total weight of the composition. It is to be understood that the skilled artisan will select any amounts of the optional at least one second PCC form and the optional at least one pigment in such a way so as to obtain various desired properties without affecting, or without substantially affecting, the advantageous properties of the PCC compositions disclosed herein.

A Process for Converting Natural Calcium Carbonate into Precipitated Calcium Carbonate

The present disclosure also relates to a process for converting natural calcium carbonate into precipitated calcium carbonate involving treating the natural calcium carbonate with a sulfate to produce a gypsum, and reacting the gypsum with at least one carbonate source to produce precipitated calcium carbonate.

The natural calcium carbonate may be, but is not limited to, limestone, marble, or chalk. In an alternative embodiment, the natural calcium carbonate is dolomitic limestone. Dolomitic quicklime is calcined dolomite that is rehydrated (e.g., MgOH and CaOH).

Conventional processes for producing precipitated calcium carbonate involve calcining natural calcium carbonate, followed by slaking and carbonation steps. The energy required for calcining natural calcium carbonate leads to high greenhouse gas emissions, and therefore such conventional calcining processes have a high carbon footprint compared to processes described herein.

In certain embodiments of the present disclosure, the natural calcium carbonate is not calcined. The present disclosure therefore relates to a low energy method of producing precipitated calcium carbonate of controlled polymorph and particle size with limestone, marble, or chalk as the calcium source, by treating said natural calcium carbonate with a sulfate followed by reaction with a carbonate source. In one embodiment, a carbon footprint is reduced by at least 1%, at least 2%, at least 3%, at least 4%, at least 5%, at least 10%, at least 15%, and up to 50%, up to 45%, up to 40% relative to a process involving calcining the natural calcium carbonate.

Treating an impure calcium carbonate source with a sulfate generates sulfate products, including calcium sulfate (gypsum) and in some cases magnesium sulfate (for example, when dolomitic limestone is used as the natural calcium carbonate). In one embodiment, the sulfate is sulfuric acid. The natural calcium carbonate is treated with a molar equivalence of sulfuric acid that is greater than or equal to the molar equivalence of calcium present in the natural calcium carbonate. In one embodiment, at least 50 wt% of calcium carbonate present in the natural calcium carbonate source is converted into gypsum during the treatment process, at least 60 wt%, at least 70 wt%, at least 80 wt%, at least 90 wt%, at least 95 wt%, at least 98 wt%, or at least 99 wt%.

The use of sulfuric acid and natural calcium carbonate (e.g. limestone) to generate gypsum is known in the art. However, the controlled precipitation of calcium carbonate to generate one or more various PCC polymorphs has not been previously described. For example, the treating process may involve adding the natural calcium carbonate as a solid, a solution, or as a slurry to a solution or neat sulfuric acid. Alternatively, a solution or neat sulfuric acid may be added to natural calcium carbonate as either a solid, a solution, or a slurry. When in the form of a solution, the concentration of sulfuric acid in the solution may be variable so long as at least a molar equivalence of sulfuric acid is used to treat the natural calcium carbonate. For example, a solution of sulfuric acid may contain about 5% to about 80% $H_2SO_4$ by weight, or about 20% to about 60% $H_2SO_4$ by weight, or about 30% to about 50% percent $H_2SO_4$ by weight. The sulfuric acid may be pure or purified, or alternatively may be a byproduct sulfuric acid, such as for example, FGD byproduct sulfuric acid or sulfuric acid obtained from titanium dioxide manufacture. Prior to the treating, the natural calcium carbonate may be ground, and may be ground to have a mesh size of less than 350 mesh, less than 325 mesh, less than 300 mesh, although various other mesh sizes including coarsely ground (greater than 350 mesh) calcium carbonate may be utilized. The natural calcium carbonate and the sulfuric acid may be flowed into a suitable reaction vessel, where the two streams may react upon contact. Alternatively, the two streams may be agitated, for example upon mechanical agitation. Treating the natural calcium carbonate with sulfuric acid may be performed as a continuous process in a continuous process reactor or in batches in a batch reactor. While reaction processes such as that described above may be used for the treatment of natural calcium carbonate with sulfuric acid to produce gypsum, many other processes and parameters may be used and are known to those of ordinary skill in the art.

After the treating process has been completed, the produced gypsum may be dewatered, washed, or both, depending on the level of impurities present in natural calcium carbonate, the impurities present in the sulfuric acid, and the desired polymorph of PCC that is to be formed.

The gypsum is then reacted with a carbonate source using one of the methods described herein (e.g. methods A through I) to produce a PCC and a sulfate-based solution-phase byproduct.

The carbonate source is at least one selected from the group consisting of ammonium carbonate, ammonium bicarbonate, ammonium carbamate, calcium carbonate, dolomite, a metal carbonate, and carbon dioxide. In one embodiment, the carbonate source is a carbonate mixture of ammonium carbonate, ammonium carbamate, and ammonium bicarbonate, and the amount of ammonium bicarbonate is greater than or equal to the amount of ammonium carbamate or ammonium carbonate in the carbonate mixture. In an alternative embodiment, the carbonate source is a carbonate mixture of ammonium carbonate, ammonium carbamate, and ammonium bicarbonate, and the amount of ammonium bicarbonate is less than the amount of ammonium carbamate or ammonium carbonate in the carbonate mixture. In the present disclosure, the molar ratio of the gypsum to the carbonate source is 1:1.1 to 1:3, 1:1.3 to 1:2.5, or 1:1.5 to 1:2.

The process of the present disclosure may further involve seeding the gypsum with a seed prior to, or during the reacting to control the crystalline polymorph and particle size of the precipitated calcium carbonate. The seed is at least one selected from the group consisting of calcium carbonate, dolomite, dolomitic carbonate, magnesium sulfate, magnesium hydroxide, titania, silica, and zinc oxide. In one embodiment, the seed does not exceed 10 wt%, or does not exceed 5 wt%, or does not exceed 1 wt% relative to the gypsum. In an alternative embodiment, the seed is at least 10 wt%, or at least 15 wt%, or at least 20 wt%, or at least 25 wt%, or at least 30 wt% relative to the gypsum.

The process of the present disclosure may further include adding at least one additive to the gypsum. The additive is a buffer, a dispersant, a thickener, an anticaking agent, a defoamer, a rheology agent, a wetting agent, a co-solvent, a brightness enhancer or a brightness dampener, or a pigment. According to certain embodiments, the additive is citric acid, phosphoric acid, ammonium sulfate, or sodium thiosulfate. In one embodiment, the weight % of the additive ranges from 0.1% to 20%, or 0.5% to 10%, or 1% to 6% relative to the gypsum.

The process for converting natural calcium carbonate into precipitated calcium carbonate may further include processing the precipitated calcium carbonate by at least one method selected from the group consisting of dewatering, drying, ageing, surface treating, size reducing, and beneficiating to produce a processed calcium carbonate. In one embodiment, the precipitated calcium carbonate is vaterite and the processed calcium carbonate is calcite or aragonite or a blend of polymorphs.

The polymorph and particle size of PCC generated from gypsum produced in this process can be controlled by methods disclosed within, including any processing steps, in one or more of their embodiments,

According to another aspect of this disclosure, the process may include providing a core or seed material in solution reacting the gypsum with the carbonate source, and precipitating calcium carbonate onto the core or seed material. The core material or seed material may be dissolvable in dilute acid, such as, for example, hydrochloric acid (HCl).

The core material or seed material may include a weighting agent. According to some embodiments, the core material may include iron oxide, such as, for example hematite. According to some embodiments, the core material may include barium sulfate. According to another aspect, the core materials or seed material may include at least one of AgI, AgCl, AgBr, AgCuS, AgS, $Ag_2S$, $Al_2O_3$, AsSb, $AuTe_2$, $BaCO_3$, $BaSO_4$, $BaCrO_4$, BaO, BeO, BiOCl, $(BiO)_2CO_3$, $BiO_3$, $Bi_2S_3$, $Bi_2O_3$, CaO, $CaF_2$, $CaWO_4$, $CaCO_3$, $(Ca,Mg)CO_3$, CdS, CdTe, $Ce_2O_3$, CoAsS, $Cr_2O_3$, CuO, $Cu_2O$, CuS, $Cu_2S$, $CuS_2$, $Cu_9S_5$, $CuFeS_2$, $Cu_5FeS_4$, $CuS.Co_2S_3$, $Fe^{2+}Al_2O_4$, $Fe_2SiO_4$, $FeWO_4$, $FeAs_2$, FeAsS, FeS, $FeS_2$, $FeCO_2$, $Fe_2O_3$, $\alpha$-$Fe_2O_3$, $\alpha$-FeO(OH), $Fe_3O_4$, $FeTiO_3$, HgS, $Hg_2Cl_2$, MgO, $MnCO_3$, $Mn_2S$, $MnWO_4$, MnO, $MnO_2$, $Mn_2O_3$, $Mn_2O_3$, $Mn_2O_7$, MnO(OH), $CaMoO_4$, $MoS_2$, $MOO_2$, $MOO_3$, $NbO_4$, NiO, $NiAS_2$, NiAs, NiAsS, NiS, PbTe, $PbSO_4$, $PbCrO_4$, $PbWO_4$, $PbCO_3$, $(PbCl)_2CO_3$, $Pb^{2+}_2Pb^{4+}O_4$, $Sb_2SnO_5$, $SC_2O_3$, SnO, $SnO_2$, SrO, $SrCO_3$, $SrSO_4$, $TiO_2$, $UO_2$, $V_2O_3$, $VO_2$, $V_2O_5$, VaO, $Y_2O_3$, $YPO_4$, $ZnCO_3$, ZnO, $ZnFe_2O_4$, $ZnAl_2O_4$, ZnS, $ZrSiO_4$, $ZrO_2$, $ZrSiO_4$, of combinations thereof. According to a further aspect, the seed material or core material may include two or more homogeneous domains, such as, for example, $(Ba,Sr)SO_4$, $(Ba,Sr)CO_2$, or $Ba(SO_4,CrO_3)$.

In some embodiments, the precipitated calcium carbonate may be between about 10% and about 25% by weight of the combined calcium carbonate and seed material or core material, such as, for example, between about 10% and about 15% by weight, between about 15% and about 20% by weight, between about 20% and about 25% by weight, between about 12% by weight and about 18% by weight, or between about 18% by weight and about 23% by weight of the combined calcium carbonate and seed material or core material.

In some embodiments, the precipitated calcium carbonate-core composition may have a specific gravity in a range having a lower limit of about 2.6, 3, 4, 4.5, 5, or 5.5 to an upper limit of about 20, 15, 10, 9, 8, or 7, and permutations thereof.

In embodiments where the natural calcium carbonate contains a substantial magnesium content such as in dolomitic limestone, the treating produces gypsum and magnesium sulfate dissolved in the solution-phase. The process of the present disclosure may further include reacting the magnesium sulfate with at least one carbonate source to produce magnesium carbonate. In one embodiment, the magnesium carbonate has a surface area greater than or equal to 20 $m^2/g$, or greater than or equal to 25 $m^2/g$, or greater than or equal to 30 $m^2/g$, or greater than or equal to 35 $m^2/g$, or greater than or equal to 40 $m^2/g$. In the present disclosure, the magnesium carbonate is in the form of magnesite.

According to another aspect, the present disclosure relates to a process for producing a precipitated calcium carbonate having a reduced carbon footprint comprising converting natural calcium carbonate to a first precipitated calcium carbonate via a gypsum intermediate, wherein the converting emits a first amount of carbon dioxide less that a second amount of carbon dioxide emitted from a process including calcination of the natural calcium carbonate to convert the natural calcium carbonate to a second precipitated calcium carbonate.

EXEMPLARY PRECIPITATED CALCIUM CARBONATE COMPOUNDS

The present disclosure relates to a precipitated calcium carbonate compound with a vaterite polymorph. The vaterite precipitated calcium carbonate described within has novel structural characteristics, such as particle size distribution (PSD), steepness, and BET surface area, as compared to heretofore known vaterite precipitated calcium carbonate. See Table 3 below for vaterite characteristics.

**TABLE 3**

|  | IMERYS Calcite | IMERYS Vaterite |
|---|---|---|
| PSD (d50), | 1.5 - 28 | 1.5 - 28 |
| d30/d70x100 | 73.5 - 59.5 | 69.0 - 43.3 |
| Surface Area (BET), $m^2/g$ | 0.4 - 20 | 8 - 17 |
| Surface Area (Stearic Acid uptake), $m^2/g$ | 0.4 - 20 | 8 - 17 |

The PCC compositions may also be characterized in terms of their cubicity, or the ratio of surface area to particle size (i.e., how close the material is to a perfect cube). According to certain embodiments of the present disclosure, a lower surface area is advantageous. Smaller particles typically have much higher surface area, but small particle size is advantageous for many different applications. Thus PCC products with small particle size material and lower than "normal" surface area are particularly advantageous. Rhombic crystal forms are generally preferred in terms of cubicity.

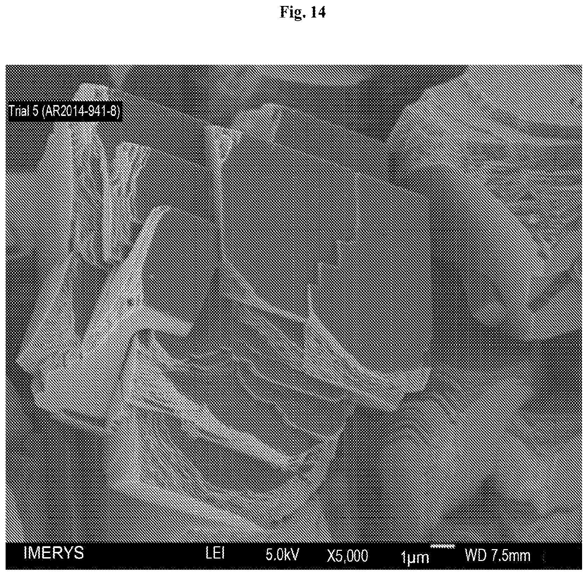

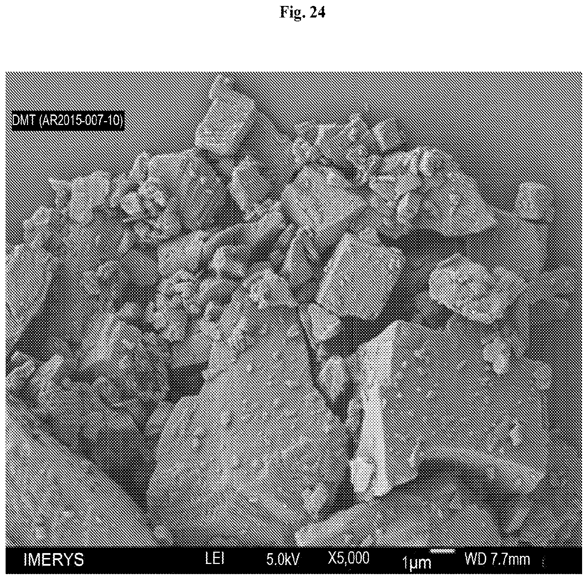

An example of a qualitative understanding of cubicity can be shown by comparing Fig. 14 with Fig. 24. Fig. 14 shows a PCC composition having a relatively low surface area to particle size ratio because of the relatively smooth, planar faces of the particles: Fig. 24, by contrast, shows a PCC composition having relatively non-planar faces because of protrusions on the faces of the particles, and therefore, the composition shown has a higher surface area and a lower cubicity.

Fig. 41 shows an exemplary measurement of squareness. According to some embodiments, the PCC compositions may have a squareness in a range from about 70 degrees to about 110 degrees. Five measurements of angles between the planar faces of the PCC particles in Fig. 41 were taken using IMAGE J analysis software, one of which is shown in Fig. 41. Angles were measured by randomly selecting particles from those having faces normal to the plane of the image. The measured angles between the edges were 74.6 degrees, 105.2 degrees, 109.6 degrees, 82.6 degrees, and 74.3 degrees. According to some embodiments, the squareness of the PCC particles may be in a range from about 70 degrees to about 110 degrees, such as, for example, in a range from about 75 degrees to about 105 degrees, or from about 80 degrees to about 110 degrees.

In the present disclosure, the monodispersity of the product refers to the uniformity of crystal size and polymorphs. The steepness ($d_{30}/d_{70}x100$), as defined above, refers to the particle size distribution bell curve, and is a monodispersity indicator. In the present disclosure, the preferred PCC product is monodisperse with a steepness greater than 30, or greater than 40, or greater than 50, and less than 60, or even less than 65. According to some embodiments, the PCC may have a steepness in a range from about 30 to about 100, such as, for example, in a range from about 34 to about 100, from about 42 to about 77. In some embodiments, the steepness may vary according to the morphology of the PCC. For example, calcite may have a different steepness than vaterite.

The present disclosure enables the generation of varied PSD ($d_{50}$) and polymorphs of the PCC product, which can be formed as vaterite, aragonite, calcite (e.g., rhombic or scalenohedral calcite), or amorphous calcium carbonate. In general, lower reaction temperature yields smaller/finer, higher surface area vaterite 'balls'. In general, lower excess of ammonium carbonate yields smaller/finer crystals within aggregates, and higher surface area products often comprised of a calcite/vaterite blend.

In one embodiment, the PCC composition of the present disclosure is characterized by a single vaterite crystal polymorph content of greater than or equal to 30% by weight relative to the total weight of the composition, greater than or equal to 40% by weight, greater than or equal to 60% by weight, greater than or equal to about 80% by weight, or greater than or equal to about 90% by weight.

In one embodiment, the vaterite PCC has a geometry comprising spherical coral, elliptical coral, rhombic, flower-shaped or mixtures thereof.

In another embodiment, the vaterite PCC has a PSD ($d_{50}$) ranging from 2.0-7.0, 2.4-6.0, or 2.6-5.5 microns.

In another embodiment, the vaterite PCC has a steepness ($d_{30}/d_{70}x100$) ranging from 30-100, 37-100, 40-83, 42-71.

In another embodiment, the vaterite PCC has a BET surface area ranging from 8-18, 10-17, or 10.4-16.1 $m^2/g$.

In another embodiment, the vaterite PCC may have an amount of hydrophobizing agent in a range from about 10 $m^2/g$ to about 17 $m^2/g$ to coat the particles.

The present disclosure also relates to a precipitated calcium carbonate compound with a calcite polymorph. The calcite precipitated calcium carbonate described within has improved structural characteristics, such as particle size distribution (PSD), steepness, and BET surface area, as compared to heretofore known calcite precipitated calcium carbonate. See Table 3 for a comparison of calcite manufactured from the process herein and a known PCC calcite.

In one embodiment, the PCC composition of the present disclosure is characterized by a single calcite crystal polymorph content of greater than or equal to 30% by weight relative to the total weight of the composition, greater than or equal to 40% by weight, greater than or equal to 60% by weight, greater than or equal to about 80% by weight, or greater than or equal to about 90% by weight.

In one embodiment, the calcite PCC has a rhombic geometry. In general, seeding gypsum with crystalized calcium carbonate consistently yields rhombic PCC. Seeding with calcite, dolomite, or magnesite yields rhombic PCC. In general, seeding with coarse scalenohedral PCC >5% yields a larger/coarser and a higher surface area product. In general, seeding with fine rhombohedral PCC <5% yields a finer crystal size within the aggregate; >5% gives finer aggregates. In the absence of seeding, ammonium carbonate conditions influence rhombic PCC formation.

In one embodiment, rhombic PCC yielded may be small stacked plates of 300-500 nm, forming inconsistent or consistent particle shapes, having a $d_{50}$ of 1-6 $\mu m$, a steepness of 91-56, and surface area 2-5 $m^2/g$.

Table 4 below identifies product characteristics obtained from various examples of the foregoing methods.

**TABLE 4**

| PCC | SEM | Individual Particle Size (est.) | Particle Size Distribution (d50), agglomerates ($\mu$m) | Steepness (d30/d70x100) | Surface Area ($m^2$/g). |
|---|---|---|---|---|---|
| Rhombic | See Fig. 8 | 300-500 nm | 4.6 | 60 | 4.6 |
| Rhombic | See Fig. 9 | 1-2 $\mu$m | 4.9 | 61 | 2.6 |
| Rhombic | See Fig. 10 | ~5$\mu$m | 27.1 | 73 | 2.8 |

In another embodiment, the calcite PCC has a PSD ($d_{50}$) ranging from 1.8-6.0, 2.2-5.8, or 2.8-5.6 microns.

In another embodiment, the calcite PCC has a steepness ($d_{30}$/ $d_{70}$x100) ranging from 30-100, 40-100, 50-83, 56-71.

In another embodiment, the calcite PCC has a BET surface area ranging from 3.0-7.0, 3.1-6.0, or 3.5-5.0 $m^2$/g.

In another embodiment, the calcite PCC may have an amount of hydrophobizing agent in a range from about 0.15 $m^2$/g to about 8 $m^2$/g to coat the particles.

The present disclosure also relates to a precipitated calcium carbonate compound with an aragonite polymorph. The aragonite precipitated calcium carbonate described within has improved structural characteristics, such as particle size distribution (PSD), steepness, and BET surface area, as compared to heretofore known aragonite precipitated calcium carbonate.

In one embodiment, the PCC compound of the present disclosure is characterized by a single aragonite crystal polymorph content of greater than or equal to 30% by weight relative to the total weight of the composition, greater than or equal to 40% by weight, greater than or equal to 60% by weight, greater than or equal to about 80% by weight, or greater than or equal to about 90% by weight.

According to some embodiments, after forming the PCC compound of the present disclosure, the morphology may be changed through post-processing techniques, such as aging. For example, according to some embodiments, an amorphous PCC may be used as a precursor to convert into a crystalline morphology, such as vaterite, aragonite, or calcite. According to some embodiments, a metastable PCC, such as vaterite or aragonite, may be converted to calcite through aging, such as, for example, wet aging. The amount of vaterite converted to calcite through aging may be varied by adjusting the properties of the aging conditions. For example, the aging may be varied by the presence or absence of ammonium sulfate, including the amount of ammonium sulfate, the aging temperature, and the concentration of wet cake solids. According to some embodiments, when less than about 90% vaterite is present, the vaterite will convert to calcite. When greater than or equal to about 90% vaterite is present, the vaterite can be retained in a dry powder or wet cake. The amount of retained vaterite may vary depending on the aging parameters. According to some embodiments, vaterite can be converted to calcite through a mechanical process, such as by grinding or ball milling the vaterite.

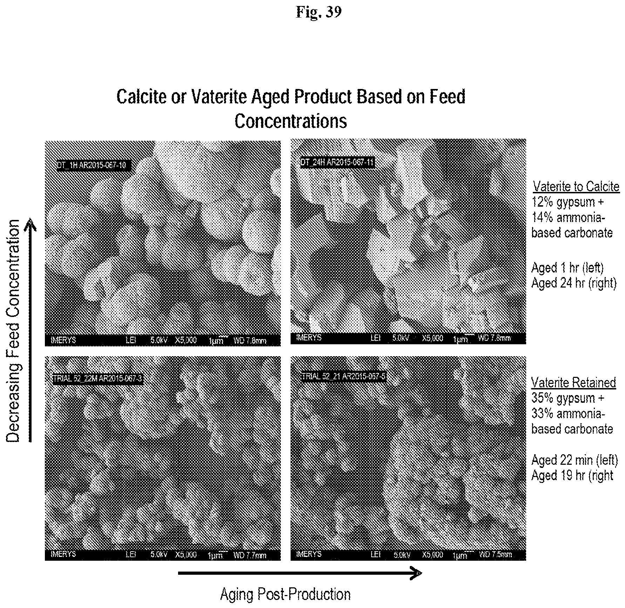

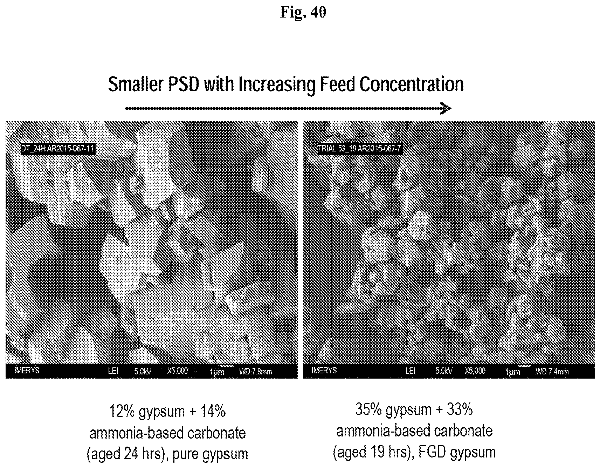

According to some embodiments, the concentrations of gypsum and ammonium carbonate may influence the conversion of vaterite to calcite. For example, higher concentrations of gypsum and ammonium carbonate may produce vaterite PCC that is more stable (e.g., resistant to converting to calcite) than vaterite PCC produced using lower concentrations of gypsum and ammonium carbonate. For example, when 10.7% gypsum and 12.5% ammonium carbonate (1:1.7 molar ratio [gypsum:ammonium carbonate]) are reacted at room temperature, the reaction forms vaterite that converts to calcite in the presence of ammonium sulfate within 24 hours. When higher concentrations of gypsum and ammonium carbonate are used in the reaction, the vaterite produced may be more stable. For example, when 35% gypsum and 33% ammonium carbonate (1:1.7 molar ratio [gypsum:ammonium carbonate]) are reacted at room temperature, the reaction forms vaterite, but the vaterite is stable in the presence of ammonium sulfate for at least 24 hours. In other embodiments, impurities, such as, for example, iron present in either gypsum or ammonium-based carbonates may assist stabilizing vaterite PCC produced by the methods described herein. According to some embodiments, the conversion of vaterite to calcite may be controlled through the storage of the vaterite. For example, vaterite in liquid suspension with ammonium sulfate may convert to calcite may be inhibited relative to cakes of vaterite having about 40-60% solids without ammonium sulfate. According to some embodiments, the conversion of vaterite to calcite may reduce the surface area of the PCC formed. For example, the conversion of vaterite to calcite may reduce the surface area of the PCC from greater than 10 $m^2$/g (vaterite) to less than 1 $m^2$/g (calcite). According to some embodiments, the conversion of vaterite to calcite may increase the particle size of the PCC. In other embodiments, the conversion of vaterite to calcite may not significantly change the particle size of the PCC. Other additives, such as, for example, citric acid may inhibit the conversion of vaterite to calcite. For example, about 5% by weight citric acid on vaterite may inhibit the conversion to calcite. According to some embodiments, adding ammonium bicarbonate may accelerate the conversion of vaterite to calcite, whereas ammonium sulfate in concentrations from about 0.5% to about 10 % by weight may slow or inhibit the conversion to calcite. Fig. 39 shows exemplary effects on morphology of the PCC by varying the feed concentrations and the aging process. Fig. 40 shows exemplary effects of the feed composition on PCC.

According to some embodiments, the methods of forming the PCC compound may be performed in a continuous process, such as, for example, using a tubular reactor. In some embodiments, in the continuous process, the reactants may be mixed in such a way as to cause cavitation.

Commercial Applications

According to certain embodiments, the present disclosure relates to commercial applications of the vaterite, calcite, and/or aragonite precipitated calcium carbonate compound described herein, in one or more of its embodiments.

According to a first aspect, the present disclosure relates to a polymer film or a breathable polymer film containing the vaterite, calcite, and/or aragonite precipitated calcium carbonate compound in one or more of its embodiments.

According to a second aspect, the present disclosure relates to a pulp or paper material containing the vaterite, calcite, and/or aragonite precipitated calcium carbonate compound in one or more of its embodiments.

According to a third aspect, the present disclosure relates to a diaper comprising a breathable polymer film containing the vaterite, calcite, and/or aragonite precipitated calcium carbonate compound in one or more of its embodiments.

According to a fourth aspect, the present disclosure relates to a filled polymer composition comprising the PCC of the present disclosure in one or more of its embodiments as filler, wherein the polymer can be any desired polymer or resin.

According to some embodiments, the PCC compositions may be used as a filler for various applications. Exemplary applications include, but are not limited to, fillers or additives for plastics, paper coatings, adhesives, sealants, caulks, paper, moldings, coatings, paint, rubber products, and concrete. For example, the PCC compositions may be used as a filler or additive for polyvinylchloride (PVC), plasticized PVC (pPVC), polypropylene (PP), rubber, coatings, paint, ceramics, paper, or concrete. Some exemplary uses Include use as a filler or additive for PVC pipes or moldings, pPVC, paint (e.g., exterior paint or road paint), tile coatings (e.g., ceiling tile coatings), decorative coatings, moldings (e.g., PVC moldings, pPVC moldings, or PP moldings), sheet molding compounds, bulk molding compounds, adhesives, caulks, sealants, rubber products, paper, paper fillers, paper coatings, or concrete. According to some embodiments, the relatively lower surface area of the PCC compositions may be suitable as a filler and may have improved dispersibility. The PCC compositions may, in general, have relatively low brightness (e.g. 65 ISO brightness) to relatively high brightness (e.g., greater than 90 ISO brightness) and may have a consistent brightness, which may improve the color of a given product in an application. The PCC compositions disclosed herein may have a relatively low surface area when compared to other calcium carbonate products, such as, for example, ground calcium carbonate (GCC). The relatively low surface area may contribute to low adsorption of additives by the PCC, reduced amounts of additives to treat a surface of the PCC, and/or low moisture pick-up by the PCC. According to some embodiments, the relatively lower surface area may contribute to a relatively lower viscosity of the material to which the PCC is added and/or a greater amount of "active" particles when used as a filler or additive, such as, for example, in polymer films. According to some embodiments, a broad particle size distribution of the PCC may increase particle packing, whereas a steep or narrow particle size distribution of the PCC may decrease particle packing. According to some embodiments, a relatively smaller PCC particle size may improve the gloss of a coating, such as, for example, a paper coating or paint, containing the PCC composition. A relatively smaller particle size may also improve the impact resistance of a material, such as, for example, a molded product or coating, containing the PCC composition.

According to some embodiments, the steepness and/or cubicity of the PCC particles described herein may improve the handling properties of powders. For example, the steepness and/or cubicity of the PCC particles may improve the flowability of powders.

According to some embodiments, the PCC compositions described herein may have improved oil absorption properties. Improved oil absorption may, for example, improve the flowability of paints or powders incorporating the PCC compositions.

According to some embodiments, the PCC compositions, such as the vaterite PCC compositions, may be used for various applications, including but not limited to drug delivery, medical devices, biosensing, encapsulation, tracing, polymer fillers, cavitation enhancement in films, heavy metal sequestration, as a nucleation agent (for example, a foam nucleation agent), an abrasive, FGD feeds, synthetic paper component, or emulsion systems filler. In some embodiments, the PCC, such as vaterite PCC, may be used as a drug delivery agent or component. For example, vaterite may be used as a platform for small molecule or protein absorption or adsorption, such as into the pores of the vaterite. Vaterite may also be used, in some embodiments, as a microparticle or microcapsule for drug encapsulation or drug delivery, for example, vaterite may be used to encapsulate molecules including, but not limited to, insulin, bovine serum albumin, and lysozymes. In some embodiments, encapsulation may occur during a phase transition of the PCC from vaterite to calcite. Such encapsulation may promote controlled release of the encapsulated molecules. In some embodiments, encapsulation may occur through absorption or adsorption of the molecules into the pores of the vaterite. In other embodiments, encapsulation may occur through direct encapsulation during the formation of the PCC particles. In other embodiments, encapsulation may occur through hollow-centered PCC particles.

According to some embodiments, the PCC, such as vaterite may be used as a controlled release agent. For example, vaterite may be exposed to highly acidic environments to control release. Vaterite exposed to such environments may break down, thereby releasing the encapsulant or encapsulated, absorbed, or adsorbed molecules. According to some embodiments, the vaterite may serve as a template protein structure to control release of a molecule. According to some embodiments, the vaterite may be used as a template for cross-linking polymer, such as, for example, biopolymers. In some embodiments, the polymers may be cross-linked using the vaterite as a template. Subsequent removal of the vaterite may result in a cross-linked polymer having a structure similar to the vaterite template (e.g., spherical).

According to some embodiments, the PCC, such as vaterite, may be used in medical devices, such as, for example, implantable medical devices. In some embodiments, vaterite may exhibit rapid bioabsorption, for example, due to vaterite's high surface area. Because of rapid absorption, vaterite may be used as a calcium source for biological applications, such as, for example, bone regeneration. Vaterite may also assist in the generation of bone minerals, such as phosphate bone minerals, such as hydroxyapatite. In some embodiments, the hydroxyapatite or other small molecules may be encapsulated by the vaterite or PCC, or may be bound (either chemically or physically) to the surface of the vaterite. Conversion of the vaterite to calcite, in some embodiments, may also promote binding of the PCC to bone.

According to some embodiments, the PCC, such as vaterite, may be used in biosensing applications. For example, vaterite may be used in biosensing of pH changes or ion sensing. In some embodiments, a fluorescent pH sensor may be encapsulated by the vaterite, such as, for example, in tracing applications.

According to some embodiments, the PCC, such as vaterite may be used as a filler for polymers. For example, the vaterite may be used in polymer films, such as, for example, cavitation enhancement. In some embodiments, the vaterite may promote more uniform cavitation of pores and may increase the breathability of the film.

According to some embodiments, PCC, such as vaterite, may encapsulate metals, such as heavy metals. For example, encapsulation may occur through a phase change from vaterite to calcite.

According to some embodiments, the PCC, such as vaterite, may be used as a nucleating agent. In some embodiments, the vaterite may act as a foam nucleating agent.

According to some embodiments, the PCC, such as vaterite, may be used as an abrasive, such as, for example, a cleaning abrasive.

According to some embodiments, the PCC, such as vaterite may be used as a feed material in an FGD process. In some embodiments, the increased surface area of the vaterite may improve reactivity and/or increase the reaction rate. For example, the vaterite may neutralize sulfuric acid generated in the FGD process.

According to some embodiments, the properties of PCC compositions, such as vaterite described in this disclosure may be beneficial for various applications. For example, a polymorph shift may be induced under shear and/or heat. For example, the vaterite may convert to needle-like particles or rhombic particles. A polymorph shift may, in some embodiments, be influenced by the presence of surfactants or macromolecules. A polymorph shift may also be influenced by inclusions in the vaterite structure, such as metals or other ions. For example, polymorph changes may be mitigated through the use of surfactants, reacting the vaterite in the presence of metals, or through the use of additives. Additives may include, but are not limited to, acids or additives for biomineralization, such as, for example, ovalbumin, glutamic acid, or aspartic acid.

The examples below are intended to further illustrate examples of a process for desulfurizing flue gas to form gypsum and for converting gypsum thus obtained or gypsum obtained from natural calcium carbonate (e.g. limestone) into precipitated calcium carbonate with desired polymorph and crystal size.

## EXAMPLE 1

Gypsum or other sulfate was slurried in water at 35% solids or in a solution of 30-35% ammonium sulfate. Ammonium carbonate was dissolved in water at elevated temperature in a concentration to give a 1:1.7 [gypsum: ammonium carbonate] molar ratio for reaction. Alternative carbonate feeds were dissolved in water at room temperature in an amount to give a 1:1.7 [sulfate: carbonate] molar ratio for reaction. The sulfate slurry and carbonate solution were mixed and allowed to react for at least 10 minutes. The slurry was then filtered and the slurry cake washed with water. Reaction cake and decanted liquid were chemically and physically analyzed by FTIR, DSC, SEM, Sedigraph, and BET surface area analysis. Reactions involving this process are described in Table 1 and 2.

EXAMPLE 2

For reactions involving ammonium carbonate production from ammonium hydroxide and $CO_2$, sulfate was slurried at ambient temperature and pressure as described above. Ammonium hydroxide was added to the sulfate slurry just prior to the mixture being poured in a reaction vessel. The reaction vessel was covered, then heated or cooled to a selected temperature with stirring. $CO_2$ was bubbled through the reaction vessel with stirring for a minimum 1 hour. After 1 hour of reaction time, a small portion of the slurry was removed and checked for full conversion to PCC by phenolphthalein color change. Upon reaction completion, the slurry was removed from the reaction vessel, filtered, washed and analyzed as described above. Reactions involving this process are described in Table 1.

Exemplary core materials with precipitated calcium carbonate

According to some embodiments, one or more of the methods disclosed in this disclosure may be used to precipitate PCC onto a core material. For example, the PCC may form a surface layer or coating that imparts beneficial properties to the core material. The process may, in some embodiments, be used to precipitate a core material from solution where the precipitated core material has a PCC layer or coating. It is understood that the use of the word "layer" or "coating" includes a precipitated calcium carbonate phase formed on at least a portion of the surface of the core material. In some embodiments, the PCC layer or coating may cover half or substantially all of the surface of the core material. The core material may form the core of a calcium carbonate-coated composition.

According to some embodiments, the core material may include a weighting agent for use in drilling fluids. The weighting agent may include iron oxide, such as, for example hematite ($Fe_2O_3$). Other weighting agents may be used, however, such as, for example, $AgI$, $AgCl$, $AgBr$, $AgCuS$, $AgS$, $Ag_2S$, $Al_2O_3$, $AsSb$, $AuTe_2$, $BaCO_3$, $BaSO_4$, $BaCrO_4$, $BaO$, $BeO$, $BiOCl$, $(BiO)_2CO_3$, $BiO_3$, $Bi_2S_3$, $Bi_2O_3$, $CaO$, $CaF_2$, $CaWO_4$, $CaCO_3$, $(Ca,Mg)CO_3$, $CdS$, $CdTe$, $Ce_2O_3$, $CoAsS$, $Cr_2O_3$, $CuO$, $Cu_2O$, $CuS$, $CU_2S$, $CuS_2$, $Cu_9S_5$, $CuFeS_2$, $Cu_5FeS_4$, $CuS.Co_2S_3$, $FeAl_2O_4$, $Fe_2SiO_4$, $FeWO_4$, $FeAs_2$, $FeAsS$, $FeS$, $FeS_2$, $FeCO_3$, $Fe_2O_3$, $\alpha$-$Fe_2O_3$, $\alpha$-$FeO(OH)$, $Fe_3O_4$, $FeTiO_3$, $HgS$, $Hg_2Cl_2$, $MgO$, $MnCO_3$, $Mn_2S$, $MnWO_4$, $MnO$, $MnO_2$, $Mn_2O_3$, $Mn_3O_3$, $Mn_2O_7$, $MnO(OH)$, $CaMoO_4$, $MoS_2$, $MOO_2$, $MOO_3$, $NbO_4$, $NiO$, $NiAs_2$, $NiAs$, $NiAsS$, $NiS$, $PbTe$, $PbSO_4$, $PbCrO_4$, $PbWO_4$, $PbCO_3$, $(PbCl)_2CO_3$, $Pb^{2+}_2Pb^{4+}O_4$, $Sb_2SnO_5$, $Sc_2O_3$, $SnO$, $SnO_2$, $SrO$, $SrCO_3$, $SrSO_4$, $TiO_2$, $UO_2$, $V_2O_3$ $VO_2$, $V_2O_3$, $VaO$, $Y_2O_3$, $YPO_4$, $ZnCO_3$, $ZnO$, $ZnFe_2O_4$, $ZnAl_2O_4$, $ZnS$, $ZrSiO_4$, $ZrO_2$, $ZrSiO_4$, of combinations thereof. According to some embodiments, the core material may include two or more homogeneous domains, such as, for example, $(Ba,Sr)SO_4$, $(Ba,Sr)CO_3$, or $Ba(SO_4,CrO_3)$. In some embodiments, barium sulfate may be used as a weighting agent onto which calcium carbonate is precipitated.

Precipitation of calcium carbonate onto a weighting agent may impart beneficial properties to the weighting agent. For example, weighting agents, such as iron oxide and barium sulfate, are denser than calcium carbonate and, therefore, provide a desirable densifying agent when added to fluids, such as drilling fluids. These weighting agents, on their own, also have a high hardness, which makes them abrasive to machinery and formations in the earth. As a result, the weighting agents may cause abrasion or corrosion of the machinery during us. By precipitating calcium carbonate onto the iron oxide or other weighting agent, the relatively lower hardness of the calcium carbonate layer (e.g., about 3 Mohs for calcium carbonate versus about 5.5 Mohs for hematite) reduces the abrasivity of the weighting agent, which may reduce the abrasion caused during use of the agent.

According to some embodiments, the amount of the calcium carbonate coating may be tailored to provide a desired specific gravity of the resulting agent. For example, a PCC-coated hematite weighting agent may have an amount of PCC to provide a specific gravity of the PCC-coated hematite that is between the specific gravity of the calcium carbonate and the core material. The modification of the specific gravity of the weighting agent may allow for tailoring the weighting agent to specific applications.

The choice of weighting agent may also be determined based on the intended application. For example, calcium carbonate and iron oxide are dissolvable in dilute acids, such as, for example, dilute hydrochloric acid (HCl). Choosing a weighting agent and coating with similar dissolution properties may permit removal of both the weighting agent and the coating to increase the flow of hydrocarbon by "shocking" the well with dilute acid to remove the weighting agent.

The precipitation of calcium carbonate onto various core materials also allows for a wider distribution of particle sizes in the weighting agent. The particle size distribution may be controlled either by the size of the weighting agent or the amount of PCC used to coat the particles.

According to some embodiments, a method of precipitating calcium carbonate may include providing a core material in solution, adding calcium sulfate to the solution, adding a carbonate source to the solution, and precipitating calcium carbonate onto the core material. According to some embodiments, the carbonate source may include ammonium carbonate.

According to some embodiments, the precipitated calcium carbonate may include a carbonate material containing calcium and at least one other metal. For example, the precipitated calcium carbonate may include dolomite ($CaMg(CO_3)_2$).

According to some embodiments, the core material may be dissolvable in dilute acid, such as, for example, hydrochloric acid (HCl).

According to some embodiments, the core material may include a weighting agent. According to some embodiments, the core material may include iron oxide, such as, for example hematite. According to some embodiments, the core material may include barium sulfate.

According to some embodiments, the precipitated calcium carbonate may be between about 10% and about 25% by weight of the combined calcium carbonate and core material, such as, for example, between about 10% and about 15% by weight, between about 15% and about 20% by weight, between about 20% and about 25% by weight, between about 12% by weight and about 18% by weight, or between about 18% by weight and about 23% by weight of the combined calcium carbonate and core material.

According to some embodiments, the precipitated calcium carbonate-core composition may have a specific gravity in a range having a lower limit of about 2.6, 3, 4, 4.5, 5, or 5.5 to an upper limit of about 20, 15, 10, 9, 8, or 7, and permutations thereof.

According to some embodiments, the precipitated calcium carbonate-core composition may be suitable for use in a drilling application. For example, the precipitated calcium carbonate-core composition may be suitable for use as a weighting agent in a drilling fluid, such as an additive to a drilling mud.

EXAMPLE 3

An exemplary calcium carbonate coated hematite was prepared by reacting calcium sulfate with ammonium carbonate solution. First, 6.30 grams of calcium sulfate from Sigma Aldrich were mixed with 250 mL of water at 25 °C for 30 minutes for form a slurry. Next, 20 grams of the Hematite were added to the slurry and mixed to keep the specific ratio of 84.5% to 15.5% hematite to PCC by weight. Then 5.97 grams of ammonium carbonate were dissolved in 250 mL of water and immediately added to the slurry. The final mixture was mixed for 1 hr to precipitate the PCC onto the hematite. After mixing, the mixture was filtered and washed to remove excess ammonium sulfate. The resulting cake containing the PCC-coated hematite was recovered.

Nothing in the above description is meant to limit the scope of the claims to any specific composition or structure of components. Many substitutions, additions, or modifications are contemplated within the scope of the present disclosure and will be apparent to those skilled in the art. The embodiments described herein were presented by way of example only and should not be used to limit the scope of the claims.

**Claims**

1. A process for converting natural calcium carbonate into precipitated calcium carbonate, comprising:

    treating the natural calcium carbonate with a sulfate to produce a gypsum; and
    reacting the gypsum with at least one carbonate source to produce precipitated calcium carbonate.

2. The process of claim 1, wherein the carbonate source is at least one selected from the group consisting of ammonium carbonate, ammonium biocarbonate, ammonium carbamate, calcium carbonate, dolomite, a metal carbonate, and carbon dioxide.

3. The process of claim 1, wherein the molar ratio of the gypsum to the carbonate source is 1:1.1 to 1:3.

4. The process of claim 1, wherein the carbonate source is a carbonate mixture of ammonium carbonate, ammonium carbamate, and ammonium biocarbonate, and the amount of ammonium biocarbonate is greater than or equal to the amount of ammonium carbamate or ammonium carbonate in the carbonate mixture.

5. The process of claim 1, wherein the carbonate source is a carbonate mixture of ammonium carbonate, ammonium carbamate, and ammonium biocarbonate, and the amount of ammonium biocarbonate is less than the amount of ammonium carbamate or ammonium carbonate in the carbonate mixture.

6. The process of claim 1, wherein the sulfate is sulfuric acid and optionally wherein the natural calcium carbonate is treated with a molar equivalence of sulfuric acid that is greater than or equal to the molar equivalence of calcium present in the natural calcium carbonate.

7. The process of claim 1, wherein the natural calcium carbonate is limestone, marble or chalk.

8. The process of claim 7, wherein the limestone is dolomitic limestone and the treating produces gypsum and magnesium sulfate and optionally further comprising reacting the magnesium sulfate with at least one carbonate source to produce magnesium carbonate with a surface area greater than or equal to 20 m$^2$/g.

9. The process of claim 8, wherein said magnesium carbonate is in the form magnesite.

10. The process of claim 1, further comprising seeding the gypsum with a seed prior to, or during the reacting to control the crystalline polymorph and particle size of the precipitated calcium carbonate optionally wherein the seed does not exceed 10 wt% relative to the gypsum or wherein the seed is at least 10 wt% relative to the gypsum.

11. The process of claim 10, wherein the seed is at least one selected from the group consisting of calcium carbonate, dolomite, dolomite carbonate, magnesium sulfate, magnesium hydroxide, titania, silica, and zinc oxide.

12. The process of claim 1, further comprising
adding at least one additive to the gypsum,
wherein the additive is a buffer, a dispersant, a thickener, an anticaking agent, a defoamer, a rheology agent, a wetting agent, a co-solvent, a brightness enhancer or brightness dampener, or a pigment,
and wherein the weight % of the additive ranges from 0.5% to 10% relative to the gypsum optionally wherein the additive is citric acid, phosphoric acid, ammonium sulfate, or sodium thiosulfate.

13. The process of claim 1, further comprising processing the precipitated calcium carbonate by at least one method selected from the group consisting of dewatering, drying, ageing, surface treating, size reducing, and beneficiating to produce a processed calcium carbonate optionally wherein the precipitated calcium carbonate is vaterite, and the processed calcium carbonate is calcite, aragonite, or a blend of polymorphs.

14. The process of claim 1, wherein the natural calcium carbonate is not calcined and optionally wherein a carbon footprint is reduced by at least 5% relative to a process involving calcining the natural calcium carbonate.


**Patentansprüche**

1. Verfahren zum Umwandeln von natürlichem Calciumcarbonat in präzipitiertes Calciumcarbonat, umfassend:

Behandeln des natürlichen Calciumcarbonats mit einem Sulfat, um einen Gips zu erzeugen; und
Reagieren des Gipses mit mindestens einer Carbonatquelle, um präzipitiertes Calciumcarbonat zu erzeugen.

2. Verfahren gemäß Anspruch 1, wobei die Carbonatquelle mindestens eine ist, die aus der Gruppe ausgewählt ist, die aus Ammoniumcarbonat, Ammoniumbicarbonat, Ammoniumcarbamat, Calciumcarbonat, Dolomit, einem Metallcarbonat und Kohlendioxid besteht.

3. Verfahren gemäß Anspruch 1, wobei das Molverhältnis des Gipses zu der Carbonatquelle 1:1,1 bis 1:3 ist.

4. Verfahren gemäß Anspruch 1, wobei die Carbonatquelle ein Carbonatgemisch aus Ammoniumcarbonat, Ammoniumcarbamat und Ammoniumbicarbonat ist und die Menge an Ammoniumbicarbonat größer als oder gleich wie die Menge an Ammoniumcarbamat oder Ammoniumcarbonat in dem Carbonatgemisch ist.

5. Verfahren gemäß Anspruch 1, wobei die Carbonatquelle ein Carbonatgemisch aus Ammoniumcarbonat, Ammoniumcarbamat und Ammoniumbicarbonat ist und die Menge an Ammoniumbicarbonat weniger als die Menge an Ammoniumcarbamat oder Ammoniumcarbonat in dem Carbonatgemisch ist.

6. Verfahren gemäß Anspruch 1, wobei das Sulfat Schwefelsäure ist und optional wobei das natürliche Calciumcarbonat mit einem Moläquivalent von Schwefelsäure behandelt wird, das größer als oder gleich wie das Moläquivalent von Calcium ist, das in dem natürlichen Calciumcarbonat vorhanden ist.

7. Verfahren gemäß Anspruch 1, wobei das natürliche Calciumcarbonat Kalkstein, Marmor oder Kreide ist.

8. Verfahren gemäß Anspruch 7, wobei der Kalkstein dolomitischer Kalkstein ist und die Behandlung Gips und Magnesiumsulfat erzeugt und optional ferner umfassend ein Reagieren des Magnesiumsulfats mit mindestens einer Carbonatquelle, um Magnesiumcarbonat mit einer Oberfläche von größer als oder gleich wie 20 m$^2$/g zu erzeugen.

9. Verfahren gemäß Anspruch 8, wobei das Magnesiumcarbonat in Form von Magnesit ist.

10. Verfahren gemäß Anspruch 1, ferner umfassend ein Impfen des Gipses mit einem Keim vor oder während des Reagierens, um die kristalline Polymorphie und die Teilchengröße des präzipitierten Calciumcarbonats zu regulieren, optional wobei der Keim 10 Gew.-%, bezogen auf den Gips, nicht überschreitet oder wobei der Keim mindestens 10 Gew.-%, bezogen auf den Gips, ist.

11. Verfahren gemäß Anspruch 10, wobei der Keim mindestens einer ist, der aus der Gruppe ausgewählt ist, die aus Calciumcarbonat, Dolomit, Dolomitcarbonat, Magnesiumsulfat, Magnesiumhydroxid, Titandioxid, Siliciumdioxid und Zinkoxid besteht.

12. Verfahren gemäß Anspruch 1, ferner umfassend ein Hinzufügen mindestens eines Additivs zu dem Gips, wobei das Additiv ein Puffermittel, ein Dispergiermittel, ein Verdickungsmittel, ein Antibackmittel, ein Entschäumer, ein Rheologiemittel, ein Benetzungsmittel, ein Co-Lösungsmittel, ein Helligkeitsverstärker oder Helligkeitsdämpfer oder ein Pigment ist, und wobei die Gewichtsprozente des Additivs in einem Bereich von 0,5 % bis 10 %, bezogen auf den Gips, sind, optional wobei das Additiv Zitronensäure, Phosphorsäure, Ammoniumsulfat oder Natriumthiosulfat ist.

13. Verfahren gemäß Anspruch 1, ferner umfassend ein Verarbeiten des präzipitierten Calciumcarbonats durch mindestens ein Verfahren, ausgewählt aus der Gruppe bestehend aus Entwässern, Trocknen, Altern, Oberflächenbehandlung, Zerkleinern und Aufbereiten, um ein verarbeitetes Calciumcarbonat zu erzeugen, optional wobei das präzipitierte Calciumcarbonat Vaterit ist und das verarbeitete Calciumcarbonat Calcit, Aragonit oder ein Gemisch von Polymorphen ist.

14. Verfahren gemäß Anspruch 1, wobei das natürliche Calciumcarbonat nicht kalziniert ist und optional wobei ein Kohlenstoff-Fußabdruck um mindestens 5 % im Vergleich zu einem Verfahren reduziert wird, das ein Kalzinieren des natürlichen Calciumcarbonats involviert.


**Revendications**

1. Processus destiné à la conversion du carbonate de calcium naturel en carbonate de calcium précipité, comprenant :

    le traitement du carbonate de calcium naturel avec un sulfate pour produire un gypse ; et
    la réaction du gypse avec au moins une source de carbonate pour produire du carbonate de calcium précipité.

2. Processus selon la revendication 1, dans lequel la source de carbonate est au moins une source sélectionnée parmi le groupe constitué de carbonate d'ammonium, de biocarbonate d'ammonium, de carbamate d'ammonium, de carbonate de calcium, de dolomite, d'un carbonate de métal et de dioxyde de carbone.

3. Processus selon la revendication 1, dans lequel le rapport molaire du gypse à la source de carbonate est de 1:1,1 à 1:3.

4. Processus selon la revendication 1, dans lequel la source de carbonate est un mélange de carbonate d'ammonium, de carbamate d'ammonium et de biocarbonate d'ammonium et la quantité de biocarbonate d'ammonium est supérieure ou égale à la quantité de carbamate d'ammonium ou de carbonate d'ammonium dans le mélange de carbonate.

5. Processus selon la revendication 1, dans lequel la source de carbonate est un mélange de carbonate d'ammonium, de carbamate d'ammonium et de biocarbonate d'ammonium et la quantité de biocarbonate d'ammonium est inférieure à la quantité de carbamate d'ammonium ou de carbonate d'ammonium dans le mélange de carbonate.

6. Processus selon la revendication 1, dans lequel le sulfate est de l'acide sulfurique et, éventuellement, dans lequel le carbonate de calcium naturel est traité avec une équivalence molaire de l'acide sulfurique supérieure ou égale à l'équivalence molaire du calcium présent dans le carbonate de calcium naturel.

7. Processus selon la revendication 1, dans lequel le carbonate de calcium naturel est le calcaire, le marbre ou la craie.

**8.** Processus selon la revendication 7, dans lequel le calcaire est du calcaire dolomitique et le traitement produit du sulfate de gypse et de magnésium et comprenant éventuellement en outre la réaction du sulfate de magnésium avec au moins une source de carbonate pour produire du carbonate de magnésium d'une surface spécifique supérieure ou égale à 20 m$^2$/g.

**9.** Processus selon la revendication 8, dans lequel ledit carbonate de magnésium est sous forme de magnésite.

**10.** Processus selon la revendication 1, comprenant en outre l'ensemencement du gypse avec un semis avant, ou lors de la réaction pour commander le polymorphe cristallin et la dimension de particule du carbonate de calcium précipité éventuellement dans lequel le semis ne dépasse pas 10 % en poids par rapport au gypse ou dans lequel le semis est au moins 10 % en poids par rapport au gypse.

**11.** Processus selon la revendication 10, dans lequel le semis est au moins un semis sélectionné parmi le groupe constitué de carbonate de calcium, de dolomite, de carbonate de dolomite, de sulfate de magnésium, d'hydroxyde de magnésium, de dioxyde de titane, de silice et d'oxyde de zinc.

**12.** Processus selon la revendication 1, comprenant en outre l'ajout d'au moins un additif au gypse,
dans lequel l'additif est un tampon, un dispersant, un épaississant, un agent anti-corrosif, un antimousse, un agent de rhéologie, un agent mouillant, un co-solvant, un rehausseur de luminosité ou un amortisseur de luminosité, ou un pigment,
et dans lequel le % de poids de l'additif varie de 0,5 % à 10 % par rapport au gypse, éventuellement dans lequel l'additif est l'acide citrique, l'acide phosphorique, le sulfate d'ammonium ou le thiosulfate de sodium.

**13.** Processus selon la revendication 1, comprenant en outre la transformation du carbonate de calcium précipité par au moins un procédé sélectionné parmi le groupe constitué de l'assèchement, du séchage, du vieillissement, du traitement de surface, de la réduction de taille et en bénéficiant pour produire un carbonate de calcium transformé, dans lequel le carbonate de calcium précipité est éventuellement la vatérite et le carbonate de calcium transformé est la calcite, l'aragonite, ou un mélange de polymorphes.

**14.** Processus selon la revendication 1, dans lequel le carbonate de calcium naturel n'est pas calciné et éventuellement dans lequel l'empreinte carbone est réduite d'au moins 5 % par rapport à un processus impliquant la calcination du carbonate de calcium naturel.

**Fig. 1**

**Fig. 2**

Fig. 3

Fig. 4

Fig. 5

**Fig. 6**

**Fig. 7**

Trial 17 (AR2014-941-11)

IMERYS LEI 5.0kV X5,000 1μm WD 7.7mm

Fig. 8

**Fig. 9**

Fig. 10

Fig. 11

Fig. 12

Fig. 13

Trial 4 (AR2014-941-2)

IMERYS    LEI    5.0kV    X5,000    1μm    WD 7.7mm

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

EP 3 245 159 B1

Fig. 29

IMERYS LEI 5.0kV X5,000 1µm WD 7.5mm

Fig. 30

Fig. 31

Fig. 32

Fig. 33

Fig. 34

**Fig. 35**

Fig. 36

Fig. 37

Fig. 38

**Fig. 39**

## Calcite or Vaterite Aged Product Based on Feed Concentrations

Vaterite to Calcite
12% gypsum +
14% ammonia-
based carbonate

Aged 1 hr (left)
Aged 24 hr (right)

Vaterite Retained
35% gypsum +
33% ammonia-
based carbonate

Aged 22 min (left)
Aged 19 hr (right

Decreasing Feed Concentration

Aging Post-Production

Fig. 40

Smaller PSD with Increasing Feed Concentration

| 12% gypsum + 14% ammonia-based carbonate (aged 24 hrs), pure gypsum | 35% gypsum + 33% ammonia-based carbonate (aged 19 hrs), FGD gypsum |

Fig. 41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013020066 A

- WO 0185412 A

**Non-patent literature cited in the description**

- **C.-Q. LI et al.** Nucleation growth of calcium carbonate crystals prepared by gypsum. *Huaxue Gongcheng/Chemical Engineering,* 17 June 2015, 6-10, 15